# EUROPEAN PATENT APPLICATION

(11) **EP 3 641 262 A1**
(43) Date of publication of application: **22.04.2020**
(21) Application number: 18832383.6
(22) Date of filing: 02.07.2018
(51) Int. Cl.: H04L 29/06

(54) **COMMUNICATION METHOD AND DEVICE, APPLICATION SERVER, USER EQUIPMENT AND SYSTEM**

(30) Priority: 12.07.2017 CN 201710564150
(71) Applicant: ZTE Corporation, Shenzhen, Guangdong 518057 (CN)
(72) Inventor: GAO, Yang, Shenzhen Guangdong 518057 (CN)
(74) Representative: Baudler, Ron
(86) International application number: PCT/CN2018/094087
(87) International publication number: WO 2019/011149

(57) **Abstract**

A communication method and device, application server, user equipment and system are provided. The communication method includes: receiving a first call request sent from an application APP module of first user equipment; when it is determined that the converged call identifier is carried in the first call request, receiving a second call request sent from a kernel module of the first user equipment, establishing a first media channel between the APP module of the first user equipment and second user equipment to conduct a first media call, and establishing a second media channel between the kernel module of the first user equipment and the second user equipment to conduct a second media call. The technical solution can solve the problem that promotion and popularization of a new IMS function are limited by inconsistent capabilities of terminals.

## Description

### TECHNICAL FIELD

The present disclosure relates to the field of communications technologies, and in particular, to a communication method and device, an application server, user equipment, and a system.

### BACKGROUND

VoLTE (Voice over Long Term Evolution) is a voice service based on IMS (IP Multimedia Subsystem). The IMS has become the core network's standard architecture in the All-IP era because it supports multiple access modes and a wide range of multimedia services. VoLTE is an IP data transmission technology, all services are carried on the 4G (the 4th Generation mobile communication technology) network, so as to implement unification of data and voice services in one network, and High-quality audio and video calls need to be realized by the VoLTE technology.

However, currently, some terminal manufacturers turn off the VoLTE video function of their terminals, so that users can only use audio during a VoLTE call. This is disadvantageous for operators to promote the VoLTE video services. A VoLTE kernel is a function built in a terminal (e.g., a mobile phone), and the function thereof is limited by the terminal manufacturer. A new function proposed by the IMS network side generally needs to go through a long process from finding a few terminal manufacturers for cooperation (i.e., VoLTE kernel customization) to popularization of the new function in terminals of each terminal manufacturer. In the process, promotion and popularization of the new IMS function will be limited by inconsistent capabilities (support for VoLTE) of terminals.

### SUMMARY

Some embodiments of the present application provide a communication method and device, an application server, user equipment, and a system, which can solve the problem that promotion and popularization of a new IMS function is limited by inconsistent capabilities of terminals.

An embodiment of the present disclosure provides a communication method, including: receiving a first call request sent from an application (APP) module of first user equipment; when it is determined that the first call request carries a converged call identifier, receiving a second call request sent from a kernel module of the first user equipment, establishing a first media channel between the APP module of the first user equipment and second user equipment so as to conduct a first media call, and establishing a second media channel between the kernel module of the first user equipment and the second user equipment so as to conduct a second media call.

An embodiment of the present disclosure further provides a communication device, including: a first communication module configured to receive a first call request sent from an application (APP) module of first user equipment; a second communication module configured to receive a second call request sent from a kernel module of the first user equipment when it is determined that the first call request carries a converged call identifier; and a third communication module configured to establish a first media channel between the APP module of the first user equipment and second user equipment so as to conduct a first media call, and establish a second media channel between the kernel module of the first user equipment and the second user equipment so as to conduct a second media call.

An embodiment of the present disclosure further provides an application server, including: a memory, a processor and a communication program stored in the memory and executable on the processor, wherein the communication program, when executed by the processor, implements steps of the above communication method.

An embodiment of the present disclosure further provides a computer-readable storage medium, in which a communication program is stored, wherein the communication program, when executed by a processor, implements steps of the above communication method.

An embodiment of the present disclosure provides a communication method, including: sending a first call request to an application server through an application (APP) module of first user equipment, wherein the first call request carries a converged call identifier; establishing a first media channel between the APP module of the first user equipment and second user equipment so as to conduct a first media call; and sending a second call request to the application server through a kernel module of the first user equipment; and establishing a second media channel between the kernel module of the first user equipment and the second user equipment so as to conduct a second media call.

An embodiment of the present disclosure further provides a communication device, including: a first communication module configured to send a first call request to an application server through an application (APP) module of first user equipment, the first call request carrying a converged call identifier; and establish a first media channel between the APP module of the first user equipment and second user equipment so as to conduct a first media call; and a second communication module configured to send a second call request to the application server through a kernel module of the first user equipment; and establish a second media channel between the kernel module of the first user equipment and the second user equipment so as to conduct a second media call.

An embodiment of the present disclosure further provides user equipment, including: a memory, a processor and a communication program which is stored in the memory and executable on the processor, wherein the communication program implements the steps of the above communication method when being executed by the processor.

An embodiment of the present disclosure further provides a computer-readable storage medium, in which a communication program is stored, and the communication program, when executed by a processor, implements steps of the above communication method.

Compared with the related art, according to the communication method, the device, the application server, the user equipment and the system provided by some embodiments of the present disclosure, the application server receives a first call request sent from an application (APP) module of first user equipment, receives a second call request sent from a kernel module of the first user equipment when it is determined that the first call request carries a converged call identifier, establishes a first media channel between the APP module of the first user equipment and second user equipment to conduct a first media call, and establishes a second media channel between the kernel module of the first user equipment and the second user equipment to conduct a second media call. The solution can solve the problem that promotion and popularization of a new IMS function are limited by inconsistent capabilities of terminals, and with the enhancement of the IMS network side, the APP and the VoLTE kernel are combined to be able to support new future-oriented IMS functions.

### BRIEF DESCRIPTION OF THE DRAWINGS

The accompanying drawings described herein are intended to provide a further understanding of the present disclosure and constitute a part of the disclosure, and exemplary embodiments of the present disclosure and description thereof serve to explain the present disclosure and not to improperly limit the present disclosure. In the drawings:
Fig. 1 is a schematic diagram of architecture of a converged communication system supporting continuous evolution of a communication network according to an embodiment of the present disclosure;
Fig. 2 (a) is a first schematic diagram of a converged communication system supporting continuous evolution of a communication network according to a first embodiment of the present disclosure;
Fig. 2 (b) is a second schematic diagram of a converged communication system supporting continuous evolution of a communication network according to the first embodiment of the present disclosure;
Fig. 2 (c) is a third schematic diagram of a converged communication system supporting continuous evolution of a communication network according to the first embodiment of the present disclosure;
Fig. 2 (d) is a fourth schematic diagram of a converged communication system supporting continuous evolution of a communication network according to the first embodiment of the present disclosure;
Fig. 3 is a flowchart of a communication method (application server side) according to a second embodiment of the present disclosure;
Fig. 4 is a flowchart of a communication method (user equipment side) in a third embodiment of the present disclosure;
Fig. 5 is a structural diagram of a communication device (application server side) according to a fourth embodiment of the present disclosure;
Fig. 6 is a structural diagram of a communication device (user equipment side) according to a fifth embodiment of the present disclosure;
Fig. 7 is an information interaction diagram of a registration flow according to Example 1 of the present disclosure;
Fig. 8 is an information interaction diagram of a calling flow according to Example 2 of the present disclosure;
Fig. 9 is an information interaction diagram of a called flow according to Example 3 of the present disclosure;
Fig. 10 is an information interaction diagram of a calling flow in a video call scenario according to Example 4 of the present disclosure;
Fig. 11 is an information interaction diagram of a called flow in a video call scenario according to Example 5 of the present disclosure;
Fig. 12 is an information interaction diagram illustrating that both calling party and called party use APP and VoLTE converged communication according to Example 6 of the present disclosure;
Fig. 13 is an information interaction diagram of a flow of rejecting new media by a called party according to Example 7 of the present disclosure;
Fig. 14 is an information interaction diagram of a flow of closing new media by a called party according to Example 8 of the present disclosure;
Fig. 15 is an information interaction diagram of a multi-party call flow according to Example 9 of the present disclosure; and
Fig. 16 is an information interaction diagram of a flow of a third-party application call according to Example 10 of the present disclosure.

### DETAILED DESCRIPTION

In order to make objects, technical solutions and advantages of the present disclosure clearer and more apparent, embodiments of the present disclosure will be described in detail below with reference to the accompanying drawings. It should be noted that embodiments and features of the embodiments in the present disclosure may be arbitrarily combined with each other without conflict.

A converged communication system supporting continuous evolution of a communication network herein realizes a new IMS function through APP (Application) and realizes an existing IMS function (e.g., voice) through a VoLTE kernel. On the UE (User Equipment) side, integration of the new function and the existing function of IMS is realized by cooperation of the APP and the VoLTE kernel. The IMS network side enhances convergence of signaling and media, and mainly involves collaborative control of an AS (Application Server) over converged communication. The AS can realize a multi-party call scenario based on converged communication by supporting a relay server and a media resource function (MRF). The AS can also interact with a third-party application through a capability open platform to realize a Web application scenario based on converged communication.

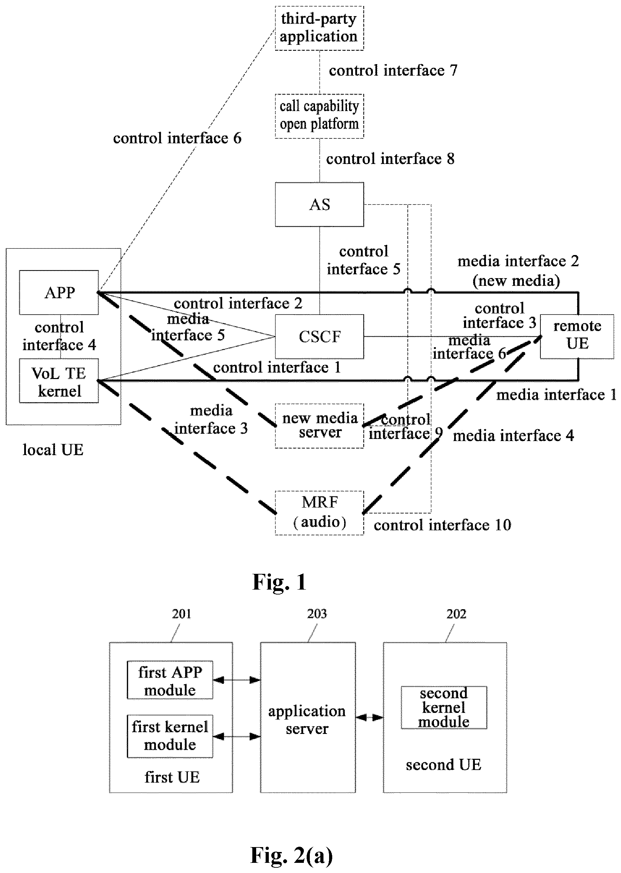

As shown in Fig. 1, network elements and interfaces involved in architecture of a converged communication system supporting continuous evolution of a communication network will be described below.

### (I) Description of network elements:

### 1) Local UE:

The local UE includes two parts: VoLTE kernel and APP.

VoLTE kernel: VoLTE kernel is a module in a terminal (e.g., a mobile phone) for implementing a VoLTE function, and is a functional component built in a mobile phone system. Atypical VoLTE kernel supports functions such as voice, message and the like. Most VoLTE kernels also support video call function.

APP: APP is an application program module in the terminal for implementing a new IMS function through software.

### 2) Remote UE:

The remote UE is remote user equipment, and may be multiple devices (implementing a multi-party call scenario). The remote UE may adopt an APP and VoLTE converged mode like the local UE, or may only support a VoLTE function.

### 3) CSCF (Call Session Control function):

The CSCF is a functional entity in IMS, and is the core of the entire IMS network. The CSCF is mainly responsible for handling signaling control during a multimedia call session. It manages user authentication of the IMS network, IMS bearer QoS (Quality of Service), SIP (session initiation protocol) session control together with other network entities, service negotiation, resource allocation, and the like.

### 4) AS (Application Server):

The AS is responsible for implementing key control logic of an APP and VoLTE converged call, and controls a new media server (Relay Server) and an MRF (media resource function) to realize a multi-party scenario of the converged call; in addition, the AS also supports interaction with a call capability open platform to open a capability of the IMS to a third-party application.

### 5) Relay Server

The relay server is a new media server, and is responsible for copying and distribution functions of new media (such as video, shared desktop, hologram, and the like).

### 6) MRF (Media Resource Function):

The MRF is a media server (audio server) of the IMS network, and is responsible for audio mixing function of voice in a multi-party call scenario.

### 7) Call capability open platform:

The call capability open platform opens the capability of the IMS to a third-party application through interaction with the AS.

### 8) Third-party application:

The third-party application uses the open capability of the IMS, and provides rich third-party multimedia applications, such as live video, remote education and the like. Atypical third-party application is a Web (World Wide Web) server.

### (II) Description of related interfaces:

### Interfaces of the control plane:

1) Control interface 1:
   The control interface 1 is a control plane interface between the VoLTE kernel in the local UE and the IMS (e.g., CSCF), and uses the SIP protocol.
2) Control interface 2:
   The control interface 2 is a control plane interface between the APP in the local UE and the IMS (e.g., CSCF), and uses the SIP protocol.
3) Control interface 3:
   The control interface 3 is a control plane interface between the IMS (e.g., CSCF) and a remote UE, and uses the SIP protocol.
4) Control interface 4:
   The control interface 4 is an interface between the APP and the VoLTE kernel in the local UE, and is mainly used by the APP to request information such as a user ID and authentication from the VoLTE kernel. Meanwhile, the VoLTE kernel uses the interface to inform the APP of a state of the call, such as ringing and the like in a converged call.
5) Control interface 5:
   The control interface 5 is an interface between the CSCF and the AS, and uses the SIP protocol.
6) Control interface 6:
   The control interface 6 is an interface between the APP in the local UE and a third-party application, and uses the HTTP (HyperText Transfer Protocol); if the third-party application is realized by the Web server, the HTTP protocol transmits an HTML (HyperText Markup Language) page and JS (Javascript).
7) Control interface 7:
   The control interface 7 is an interface between a third-party application and the call capability open platform.
8) Control interface 8:
   The control interface 8 is an interface between the call capability open platform and the AS.
9) Control interface 9:
   The control interface 9 is an interface, through which the AS controls the relay server, and uses the SIP protocol in conjunction with MSML (Media Server Markup Language) protocol;
10) Control interface 10:
   The control interface 10 is an interface, through which the AS controls the MRF, and uses the SIP protocol in conjunction with MSML protocol;

### Media interfaces:

1) Media interface 1:
   The media interface 1 is a media interface between the VoLTE kernel of the local UE and a remote UE.
2) Media interface 2:
   The media interface 2 is a media interface between the APP of the local UE and a remote UE.
3) Media interface 3:
   The media interface 3 is a media interface between the VoLTE kernel of the local UE and the MRF in a multi-party call scenario.
4) Media interface 4:
   The media interface 4 is a media interface between a remote UE and the MRF in a multi-party call scenario.
5) Media interface 5:
   The media interface 5 is a media interface between an APP of the local UE and the relay server in a multi-party call scenario.
6) Media interface 6:
   The media interface 6 is a media interface between a remote UE and the relay server in a multi-party call scenario.

### First embodiment

As shown in Fig. 2 (a), an embodiment of the present disclosure provides a converged communication system supporting continuous evolution of a communication network, including: first user equipment 201, second user equipment 202 and an application server 203. The first user equipment includes a first APP module and a first kernel module, and the second user equipment includes a second kernel module.

The first user equipment is configured to send a first call request carrying a converged call identifier to the application server through the first APP module; establish a first media channel between the first APP module and the second kernel module of the second user equipment so as to conduct a first media call; send a second call request to the application server through the first kernel module; and establish a second media channel between the first kernel module and the second kernel module of the second user equipment so as to conduct a second media call.

The second user equipment is configured to establish the first media channel with the first APP module of the first user equipment through the second kernel module so as to conduct the first media call; and establish the second media channel with the first kernel module of the first user equipment through the second kernel module so as to conduct the second media call.

The application server is configured to receive the first call request sent from the first APP module of the first user equipment; when it is determined that the first call request carries the converged call identifier, receive the second call request sent from the first kernel module of the first user equipment, establish the first media channel between the first APP module of the first user equipment and the second kernel module of the second user equipment so as to conduct the first media call, and establish the second media channel between the first kernel module of the first user equipment and the second kernel module of the second user equipment so as to conduct the second media call.

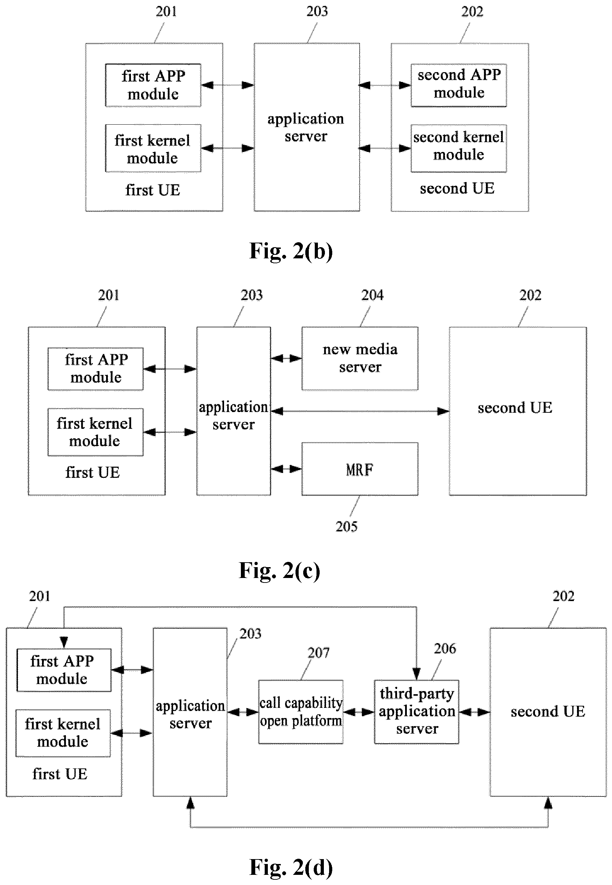

As shown in Fig. 2 (b), an embodiment of the present disclosure provides a converged communication system supporting continuous evolution of a communication network, including: first user equipment 201, second user equipment 202 and an application server 203. The first user equipment includes a first APP module and a first kernel module, and the second user equipment includes a second APP module and a second kernel module.

The first user equipment is configured to send a first call request carrying a converged call identifier to the application server through the first APP module; establish a first media channel between the first APP module and the second APP module of the second user equipment so as to conduct a first media call; send a second call request to the application server through the first kernel module; and establish a second media channel between the first kernel module and the second kernel module of the second user equipment so as to conduct a second media call.

The second user equipment is configured to establish the first media channel with the first APP module of the first user equipment through the second APP module so as to conduct the first media call; and establish the second media channel with the first kernel module of the first user equipment through the second kernel module so as to conduct the second media call.

The application server is configured to receive the first call request sent from the first APP module of the first user equipment; when it is determined that the first call request carries the converged call identifier, receive the second call request sent from the first kernel module of the first user equipment, establish the first media channel between the first APP module of the first user equipment and the second APP module of the second user equipment so as to conduct the first media call, and establish the second media channel between the first kernel module of the first user equipment and the second kernel module of the second user equipment so as to conduct the second media call.

As shown in Fig. 2 (c), an embodiment of the present disclosure provides a converged communication system supporting continuous evolution of a communication network, including: first user equipment 201, second user equipment 202, an application server 203, a new media server 204 and a media resource function MRF 205. The first user equipment includes a first APP module and a first kernel module.

The first user equipment is configured to send a first call request carrying a converged call identifier to the application server through the first APP module; establish a first media channel between the first APP module and the second user equipment so as to conduct a first media call; send a second call request to the application server through the first kernel module; and establish a second media channel between the first kernel module and the second user equipment so as to conduct a second media call.

The second user equipment is configured to establish the first media channel with the first APP module of the first user equipment so as to conduct the first media call; and establishing the second media channel with the first kernel module of the first user equipment so as to conduct the second media call.

The application server is configured to receive the first call request sent from the first APP module of the first user equipment; when it is determined that the first call request carries the converged call identifier, receive the second call request sent from the first kernel module of the first user equipment, establish the first media channel between the first APP module of the first user equipment and the second user equipment through the new media server so as to conduct the first media call, and establish the second media channel between the first kernel module of the first user equipment and the second user equipment through the MRF so as to conduct the second media call.

The new media server is configured to establish a calling part of the first media channel with the first APP module of the first user equipment, and establish a called part of the first media channel with the second user equipment.

The MRF is configured to establish a calling part of the second media channel with the first kernel module of the first user equipment, and establish a called part of the second media channel with the second user equipment.

As shown in Fig. 2 (d), an embodiment of the present disclosure provides a converged communication system supporting continuous evolution of a communication network, including: first user equipment 201, second user equipment 202, an application server 203, a third-party application server 206 and a call capability open platform 207. The first user equipment includes a first APP module and a first kernel module.

The first user equipment is configured to acquire a user page from the third-party application server through the first APP module and display the user page; send a first call request to the application server through the first APP module, the first call request carrying a converged call identifier and user page indication information, and the user page indication information used for indicating information of a user page of the second user equipment; establish a first media channel between the first APP module and the second user equipment so as to conduct a first media call; send a second call request to the application server through the first kernel module; establish a second media channel between the first kernel module and the second user equipment so as to conduct a second media call.

The second user equipment is configured to acquire a user page from the third-party application server according to the user page indication information sent from the first user equipment and display the user page; establish the first media channel with the first APP module of the first user equipment so as to conduct the first media call; and establish the second media channel with the first kernel module of the first user equipment so as to conduct the second media call.

The application server is configured to receive a query request of the third-party application server for querying a user page parameter of the first user equipment, and send the user page parameter of the first user equipment to the third-party application server; and receive a query request of the third-party application server for querying a user page parameter of the second user equipment, and send the user page parameter of the second user equipment to the third-party application server.

The application server is further configured to receive the first call request sent from the first APP module of the first user equipment; when it is determined that the first call request carries the converged call identifier, receive the second call request sent from the first kernel module of the first user equipment, establish the first media channel between the first APP module of the first user equipment and the second user equipment through a new media server so as to conduct the first media call, and establish the second media channel between the first kernel module of the first user equipment and the second user equipment through an MRF so as to conduct the second media call.

The third-party application server is configured to query user page parameters of the first user equipment and the second user equipment at the application server, and provide the user pages to the first user equipment and the second user equipment.

The call capability open platform is configured to forward messages between the third-party application server and the application server.

### Second embodiment

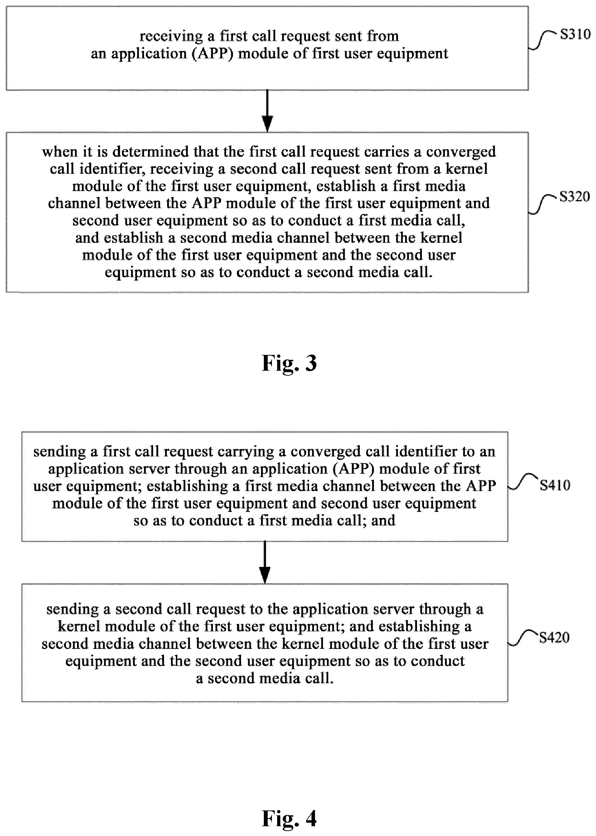

As shown in Fig. 3, an embodiment of the present disclosure provides a communication method, including:
Step S310: receiving a first call request sent from an application (APP) module of first user equipment; and
Step S320, when it is determined that the first call request carries a converged call identifier, receiving a second call request sent from a kernel module of the first user equipment, establishing a first media channel between the APP module of the first user equipment and second user equipment so as to conduct a first media call, and establishing a second media channel between the kernel module of the first user equipment and the second user equipment so as to conduct a second media call.

In an implementation, establishing the first media channel between the APP module of the first user equipment and the second user equipment so as to conduct the first media call includes:
acquiring a media description of the first media call of the first user equipment from the first call request and sending the media description to the second user equipment;
receiving a media description of the first media call of the second user equipment fed back by the second user equipment on the media description of the first media call of the first user equipment; and
sending the media description of the first media call of the second user equipment to the APP module of the first user equipment.

In an implementation, establishing the second media channel between the kernel module of the first user equipment and the second user equipment so as to conduct the second media call includes:
acquiring a media description of the second media call of the first user equipment from the second call request and sending the media description to the second user equipment;
receiving a media description of the second media call of the second user equipment fed back by the second user equipment on the media description of the second media call of the first user equipment; and
sending the media description of the second media call of the second user equipment to the kernel module of the first user equipment.

In an implementation, establishing the first media channel between the APP module of the first user equipment and the second user equipment so as to conduct the first media call includes:
when the kernel module of the second user equipment is determined to support the first media call, acquiring a media description of the first media call of the first user equipment from the first call request and sending the media description to the kernel module of the second user equipment;
receiving a media description of the first media call of the second user equipment fed back by the kernel module of the second user equipment on the media description of the first media call of the first user equipment; and
sending the media description of the first media call of the second user equipment to the APP module of the first user equipment.

In an implementation, establishing the first media channel between the APP module of the first user equipment and the second user equipment to conduct the first media call includes:
when it is determined that the kernel module of the second user equipment does not support the first media call and the APP module of the second user equipment supports the first media call, acquiring the media description of the first media call of the first user equipment from the first call request and sending the media description to the APP module of the second user equipment;
receiving a media description of the first media call of the second user equipment fed back by the APP module of the second user equipment on the media description of the first media call of the first user equipment; and
sending the media description of the first media call of the second user equipment to the APP module of the first user equipment.

Determining whether the kernel module of the second user equipment supports the first media call or not includes:
determining whether the kernel module of the second user equipment supports the first media call or not through media support capability indication information reported by the kernel module of the second user equipment during registration.

Determining whether the APP module of the second user equipment supports the first media call or not includes:
determining whether the APP module of the second user equipment supports the first media call or not through media support capability indication information reported by the APP module of the second user equipment during registration.

Here, the media support capability indication information is used for indicating a media type supported by the user equipment.

In an implementation, establishing the first media channel between the APP module of the first user equipment and the second user equipment so as to conduct the first media call includes:
acquiring a media description of the first media call of the first user equipment from the first call request and sending the media description to the second user equipment;
receiving a media description of the first media call of the second user equipment fed back by the second user equipment on the media description of the first media call of the first user equipment; and
if the media description of the first media call of the second user equipment indicates that the second user equipment rejects the first media call, sending indication information indicating that the second user equipment rejects the first media call to the APP module of the first user equipment to indicate failure to establish the first media channel.

In an implementation, the method further includes:
after the first media call and the second media call are established between the first user equipment and the second user equipment, if indication information for closing the first media channel sent from the APP module of the first user equipment is received, the indication information for closing the first media channel is sent to the second user equipment; or
after the first media call and the second media call are established between the first user equipment and the second user equipment, if indication information for closing the first media channel sent from the second user equipment is received, the indication information for closing the first media channel is sent to the APP module of the first user equipment.

In an implementation, establishing the first media channel between the APP module of the first user equipment and the second user equipment so as to conduct the first media call, and establishing the second media channel between the kernel module of the first user equipment and the second user equipment so as to conduct the second media call include:
establishing a calling part of the first media channel between the APP module of the first user equipment and a new media server, and establishing a called part of the first media channel between the new media server and second user equipment; and
establishing a calling part of the second media channel between the kernel module of the first user equipment and a Media Resource Function (MRF) and establishing a called part of the second media channel between the MRF and the second user equipment.

In an implementation, establishing the calling part of the first media channel between the APP module of the first user equipment and the new media server includes:
acquiring a media description of the first media call of the first user equipment from the first call request and sending the media description to the new media server;
receiving a media description of the first media call of the new media server fed back by the new media server on the media description of the first media call of the first user equipment; and
sending the media description of the first media call of the new media server to the APP module of the first user equipment.

Establishing the called part of the first media channel between the new media server and the second user equipment includes:
sending a media description of the first media call of the new media server to the second user equipment;
receiving a media description of the first media call of the second user equipment fed back by the second user equipment on the media description of the first media call of the new media server; and
sending the media description of the first media call of the second user equipment to the new media server.

In an implementation, establishing the calling part of the second media channel between the kernel module of the first user equipment and the media resource function (MRF) includes:
acquiring a media description of the second media call of the first user equipment from the second call request and sending the media description to the MRF;
receiving a media description of the second media call of the MRF fed back by the MRF on the media description of the second media call of the first user equipment; and
sending the media description of the second media call of the MRF to the kernel module of the first user equipment.

Establishing the called part of the second media channel between the MRF and the second user equipment includes:
sending a media description of the second media call of the MRF to the second user equipment;
receiving a media description of the second media call of the second user equipment fed back by the second user equipment on the media description of the second media call of the MRF; and
sending the media description of the second media call of the second user equipment to the MRF.

In an implementation, at least one second user equipment is provided.

In the case of a plurality of second user equipments, establishing the called part of the first media channel between the new media server and the second user equipment includes: establishing a called part of the first media channel between the new media server and the second user equipment for each second user equipment.

In an implementation, before receiving the first call request sent from the application (APP) module of the first user equipment, the method further includes:
after receiving a query request of a third-party application server for querying a user page parameter of the first user equipment, sending the user page parameter of the first user equipment to the third-party application server.

In an implementation, establishing the first media channel between the APP module of the first user equipment and the second user equipment so as to conduct the first media call includes:
acquiring, from the first call request, a media description of the first media call of the first user equipment and user page indication information, the user page indication information being used for indicating information of a user page of the second user equipment;
sending the media description of the first media call of the first user equipment and the user page indication information to the second user equipment;
receiving a media description of the first media call of the second user equipment fed back by the second user equipment on the media description of the first media call of the first user equipment; and
sending the media description of the first media call of the second user equipment to the APP module of the first user equipment.

In an implementation, after the media description of the first media call of the first user equipment and the user page indication information are sent to the second user equipment, the method further includes:
after receiving a query request of the third-party application server for querying a user page parameter of the second user equipment, sending the user page parameter of the second user equipment to the third-party application server.

In an implementation, after the first media call and the second media call are established between the first user equipment and the second user equipment, the method further includes:
after receiving a query request from the third-party application server for querying a user page parameter corresponding to a newly-added media stream of the first user equipment, sending the user page parameter corresponding to the newly-added media stream of the first user equipment to the third-party application server;
after receiving a query request of the third-party application server for querying a user page parameter corresponding to a newly-added media stream of the second user equipment, sending the user page parameter corresponding to the newly-added media stream of the second user equipment to the third-party application server; and
sending a media description of the newly-added media stream of the first user equipment to the APP module of the first user equipment, and sending a media description of the newly-added media stream of the second user equipment to the second user equipment.

In an implementation, the first medium includes: a video media; and the second media includes: an audio media.

In an implementation, the kernel module is a VoLTE (Voice over Long Term Evolution) kernel module.

### Third embodiment

As shown in Fig. 4, an embodiment of the present disclosure provides a communication method, including:
Step S410: sending a first call request to an application server through an application (APP) module of first user equipment, the first call request carrying a converged call identifier; establishing a first media channel between the APP module of the first user equipment and second user equipment so as to conduct a first media call; and
Step S420: sending a second call request to the application server through a kernel module of the first user equipment; and establishing a second media channel between the kernel module of the first user equipment and the second user equipment so as to conduct a second media call.

In an implementation, establishing the first media channel between the APP module of the first user equipment and the second user equipment so as to conduct the first media call includes:
sending, by the APP module of the first user equipment, a media description of the first media call of the first user equipment to the second user equipment through the application server; and
receiving, by the APP module of the first user equipment, a media description of the first media call of the second user equipment fed back by the second user equipment on the media description of the first media call of the first user equipment through the application server.

In an implementation, establishing the second media channel between the kernel module of the first user equipment and the second user equipment so as to conduct the second media call includes:
sending, by the kernel module of the first user equipment, a media description of the second media call of the first user equipment to the second user equipment through the application server; and
receiving, by the kernel module of the first user equipment, a media description of the second media call of the second user equipment fed back by the second user equipment on the media description of the second media call of the first user equipment through the application server.

In an implementation, establishing the first media channel between the APP module of the first user equipment and the second user equipment so as to conduct the first media call includes:
sending, by the APP module of the first user equipment, a media description of the first media call of the first user equipment to the second user equipment through the application server; and
receiving, by the APP module of the first user equipment, a media description of the first media call of the second user equipment fed back by the second user equipment on the media description of the first media call of the first user equipment through the application server, and if the media description of the first media call of the second user equipment indicates that the second user equipment rejects the first media call, stop establishing the first media channel between the APP module of the first user equipment and the second user equipment.

In an implementation, after the first media call and the second media call are established between the first user equipment and the second user equipment, if the first media channel is required to be closed, indication information of closing the first media channel is sent to the application server through the APP module, and the application server forwards the indication information of closing the first media channel to the second user equipment to end the first media call; or
after the first media call and the second media call are established between the first user equipment and the second user equipment, if indication information of closing the first media channel sent from the second user equipment is received, the first media call is ended.

In an implementation, establishing the first media channel between the APP module of the first user equipment and the second user equipment so as to conduct the first media call includes:
sending, by the APP module of the first user equipment, a media description of the first media call of the first user equipment to a new media server through the application server; and
receiving, by the APP module of the first user equipment, a media description of the first media call of the new media server fed back by the new media server on the media description of the first media call of the first user equipment through the application server.

In an implementation, establishing the second media channel between the kernel module of the first user equipment and the second user equipment so as to conduct the second media call includes:
sending, by the kernel module of the first user equipment, a media description of the second media call of the first user equipment to a Media Resource Function (MRF) through the application server; and
receiving, by the kernel module of the first user equipment, a media description of the second media call of the MRF fed back by the MRF on the media description of the second media call of the first user equipment through the application server.

In an implementation, before sending the first call request to the application server through the APP module of the first user equipment, the method further includes:
acquiring a user page of the first user equipment from a third-party application server through the APP module of the first user equipment, and displaying the user page,
wherein the first call request also carries user page indication information, and the user page indication information is used for indicating information of a user page of the second user equipment.

In an implementation, after the first user equipment and the second user equipment establish the first media call and the second media call, the method further includes:
if the first user equipment wants to newly add a media stream, acquiring a user page corresponding to the newly-added media stream of the first user equipment from the third-party application server through the APP module of the first user equipment, and displaying the user page; and receiving the media description of the newly-added media stream of the first user equipment sent from the application server.

In an implementation, the kernel module is a VoLTE (Voice over Long Term Evolution) kernel module.

### Fourth embodiment

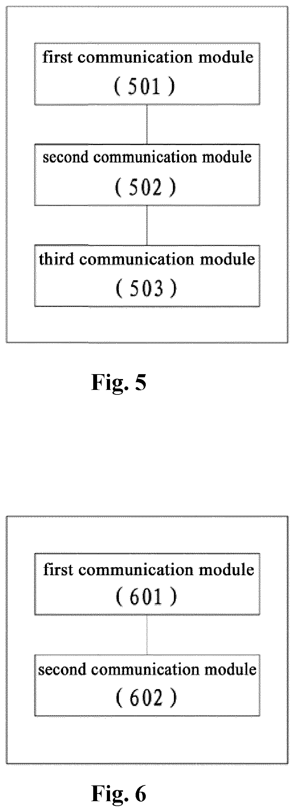

As shown in Fig. 5, an embodiment of the present disclosure provides a communication device, including:
a first communication module 501 configured to receive a first call request sent from an application (APP) module of first user equipment;
a second communication module 502 configured to receive a second call request sent from a kernel module of the first user equipment when it is determined that the first call request carries a converged call identifier; and
a third communication module 503 configured to establish a first media channel between the APP module of the first user equipment and second user equipment to conduct a first media call, and establish a second media channel between the kernel module of the first user equipment and the second user equipment to conduct a second media call.

In an implementation, the third communication module is configured to establish the first media channel between the APP module of the first user equipment and the second user equipment to conduct the first media call by:
acquiring, from the first call request, a media description of the first media call of the first user equipment and sending the media description to the second user equipment;
receiving a media description of the first media call of the second user equipment fed back by the second user equipment on the media description of the first media call of the first user equipment; and
sending the media description of the first media call of the second user equipment to the APP module of the first user equipment.

In an implementation, the third communication module is configured to establish the second media channel between the kernel module of the first user equipment and the second user equipment to conduct the second media call by:
acquiring, from the second call request, a media description of the second media call of the first user equipment and sending the media description to the second user equipment;
receiving a media description of the second media call of the second user equipment fed back by the second user equipment on the media description of the second media call of the first user equipment; and
sending the media description of the second media call of the second user equipment to the kernel module of the first user equipment.

In an implementation, the third communication module is configured to establish the first media channel between the APP module of the first user equipment and the second user equipment to conduct the first media call by:
acquiring, from the first call request, a media description of the first media call of the first user equipment and sending the media description to a kernel module of the second user equipment when it is determined that the kernel module of the second user equipment supports the first media call;
receiving a media description of the first media call of the second user equipment fed back by the kernel module of the second user equipment on the media description of the first media call of the first user equipment; and
sending the media description of the first media call of the second user equipment to the APP module of the first user equipment.

In an implementation, the third communication module is configured to establish the first media channel between the APP module of the first user equipment and the second user equipment to conduct the first media call by:
acquiring, from the first call request, a media description of the first media call of the first user equipment and sending the media description to an APP module of the second user equipment when it is determined that the kernel module of the second user equipment does not support the first media call and the APP module of the second user equipment supports the first media call; and
receiving a media description of the first media call of the second user equipment fed back by the APP module of the second user equipment on the media description of the first media call of the first user equipment; and
sending the media description of the first media call of the second user equipment to the APP module of the first user equipment.

In an implementation, the third communication module is configured to establish the first media channel between the APP module of the first user equipment and the second user equipment to conduct the first media call by:
acquiring, from the first call request, a media description of the first media call of the first user equipment and sending the media description to second user equipment;
receiving a media description of the first media call of the second user equipment fed back by the second user equipment on the media description of the first media call of the first user equipment; and
sending indication information indicating that the second user equipment rejects the first media call to the APP module of the first user equipment to indicate failure to establish the first media channel if the media description of the first media call of the second user equipment indicates that the second user equipment rejects the first media call.

In an implementation, the third communication module is further configured to, after the first media call and the second media call are established between the first user equipment and the second user equipment, send indication information of closing the first media channel to the second user equipment if the indication information of closing the first media channel sent from the APP module of the first user equipment is received; or after the first media call and the second media call are established between the first user equipment and the second user equipment, send indication information of closing the first media channel to the APP module of the first user equipment if the indication information of closing the first media channel sent from the second user equipment is received,.

In an embodiment, the third communication module is configured to establish a first media channel between the APP module of the first user equipment and the second user equipment to conduct the first media call, and establish the second media channel between the kernel module of the first user equipment and the second user equipment to conduct the second media call by:
establishing a calling part of the first media channel between the APP module of the first user equipment and a new media server, and establishing a called part of the first media channel between the new media server and second user equipment; and
establishing a calling part of the second media channel between the kernel module of the first user equipment and a Media Resource Function (MRF) and establishing a called part of the second media channel between the MRF and the second user equipment.

In an implementation, the third communication module is configured to establish the calling part of the first media channel between the APP module of the first user equipment and the new media server by:
acquiring, from the first call, a media description of the first media call of the first user equipment request and sending the media description to the new media server;
receiving a media description of the first media call of the new media server fed back by the new media server on the media description of the first media call of the first user equipment; and
sending the media description of the first media call of the new media server to the APP module of the first user equipment.

The third communication module is configured to establish the called part of the first media channel between the new media server and the second user equipment by:
sending the media description of the first media call of the new media server to the second user equipment;
receiving a media description of the first media call of the second user equipment fed back by the second user equipment on the media description of the first media call of the new media server; and
sending the media description of the first media call of the second user equipment to the new media server.

In an implementation, the third communication module is configured to establish the calling part of the second media channel between the kernel module of the first user equipment and the media resource function (MRF) by:
acquiring, from the second call request, a media description of the second media call of the first user equipment and sending the media description to the MRF;
receiving a media description of the second media call of the MRF fed back by the MRF on the media description of the second media call of the first user equipment; and
sending the media description of the second media call of the MRF to the kernel module of the first user equipment.

The third communication module is configured to establish the called part of the second media channel between the MRF and the second user equipment by:
sending the media description of the second media call of the MRF to the second user equipment;
receiving a media description of the second media call of the second user equipment fed back by the second user equipment on the media description of the second media call of the MRF; and
sending the media description of the second media call of the second user equipment to the MRF.

In an implementation, at least one second user equipments are provided.

In the case of a plurality of second user equipments, establishing the called part of the first media channel between the new media server and the second user equipment includes: establishing a called part of the first media channel between the new media server and the second user equipment for each second user equipment.

In an implementation, the device further includes:
a fourth communication module 504 configured to receive a query request of a third-party application server for querying a user page parameter of the first user equipment, and send the user page parameter of the first user equipment to the third-party application server; receive a query request for querying a user page parameter of the second user equipment from the third-party application server, and sending the user page parameter of the second user equipment to the third-party application server.

The third communication module is configured to establish the first media channel between the APP module of the first user equipment and the second user equipment to conduct the first media call by: acquiring, from the first call request, a media description of the first media call of the first user equipment and user page indication information, the user page indication information being used for indicating information of a user page of the second user equipment; sending the media description of the first media call of the first user equipment and the user page indication information to the second user equipment; receiving a media description of the first media call of the second user equipment fed back by the second user equipment on the media description of the first media call of the first user equipment; and sending the media description of the first media call of the second user equipment to the APP module of the first user equipment.

In an implementation, the device further includes:
a fifth communication module 505 configured to: after the first media call and the second media call are established between the first user equipment and the second user equipment, receive a query request of a third-party application server for querying a user page parameter corresponding to a newly-added media stream of the first user equipment, and then send the user page parameter corresponding to the newly-added media stream of the first user equipment to the third-party application server; receive a query request of the third-party application server for querying a user page parameter corresponding to a newly-added media stream of the second user equipment, and then send the user page parameter corresponding to the newly-added media stream of the second user equipment to the third-party application server; and send a media description of the newly-added media stream of the first user equipment to the APP module of the first user equipment, and send a media description of the newly-added media stream of the second user equipment to the second user equipment.

In an implementation, the first medium includes: a video media; and the second media includes: an audio media.

In an implementation, the kernel module is a VoLTE (Voice over Long Term Evolution) kernel module.

### Fifth embodiment

As shown in Fig. 6, an embodiment of the present disclosure provides a communication device, including:
a first communication module 601 configured to send a first call request to an application server through an application (APP) module of first user equipment, the first call request carrying a converged call identifier; and establish a first media channel between the APP module of the first user equipment and second user equipment to conduct a first media call; and
a second communication module 602 configured to send a second call request to the application server through a kernel module of the first user equipment; and establish a second media channel between the kernel module of the first user equipment and the second user equipment to conduct a second media call.

In an implementation, the first communication module is configured to establish the first media channel between the APP module of the first user equipment and the second user equipment to conduct the first media call in such a manner that: the APP module of the first user equipment sends a media description of the first media call of the first user equipment to the second user equipment through an application server, and the APP module of the first user equipment receives a media description of the first media call of the second user equipment fed back by the second user equipment on the media description of the first media call of the first user equipment through the application server.

The second communication module is configured to establish the second media channel between the kernel module of the first user equipment and the second user equipment to conduct the second media call in such a manner that: the kernel module of the first user equipment sends a media description of the second media call of the first user equipment to the second user equipment through the application server, and the kernel module of the first user equipment receives the media description of the second media call of the second user equipment fed back by the second user equipment on the media description of the second media call of the first user equipment through the application server.

In an implementation, the first communication module is configured to establish the first media channel between the APP module of the first user equipment and the second user equipment to conduct the first media call in such a manner that: the APP module of the first user equipment sends a media description of the first media call of the first user equipment to the second user equipment through an application server; the APP module of the first user equipment receives a media description of the first media call of the second user equipment fed back by the second user equipment on the media description of the first media call of the first user equipment through the application server, and stops establishing the first media channel between the APP module of the first user equipment and the second user equipment if the media description of the first media call of the second user equipment indicates that the second user equipment rejects the first media call.

In an implementation, the first communication module is further configured to, after the first media call and the second media call are established between the first user equipment and the second user equipment, send, through the APP module, instruction information of closing the first media channel to the application server, which forwards the instruction information of closing the first media channel to the second user equipment to end the first media call, if the first media channel is desired to be closed; or after the first media call and the second media call are established between the first user equipment and the second user equipment, end the first media call if indication information of closing the first media channel sent from the second user equipment is received.

In an implementation, the first communication module is configured to establish the first media channel between the APP module of the first user equipment and the second user equipment to conduct the first media call in such a manner that: the APP module of the first user equipment sends a media description of the first media call of the first user equipment to a new media server through an application server, and the APP module of the first user equipment receives a media description of the first media call of the new media server fed back by the new media server on the media description of the first media call of the first user equipment through the application server.

The second communication module is configured to establish the second media channel between the kernel module of the first user equipment and the second user equipment to conduct the second media call in such a manner that: the kernel module of the first user equipment sends a media description of the second media call of the first user equipment to a Media Resource Function (MRF) through the application server, and the kernel module of the first user equipment receives the media description of the second media call of the MRF fed back by the MRF on the media description of the second media call of the first user equipment through the application server.

In an implementation, the first communication module is further configured to acquire a user page of the first user equipment from a third-party application server through the APP module of the first user equipment, and display the user page.

The first call request also carries user page indication information, and the user page indication information is used for indicating information of a user page of the second user equipment.

In an implementation, the first communication module is further configured to, after the first media call and the second media call are established between the first user equipment and the second user equipment, if the first user equipment wants to newly add a media stream, obtain a user page corresponding to the newly-added media stream of the first user equipment from the third-party application server through the APP module of the first user equipment, and display the user page; and receive a media description of the newly-added media stream of the first user equipment sent from the application server.

In an implementation, the kernel module is a VoLTE (Voice over Long Term Evolution) kernel module.

### Sixth embodiment

An embodiment of the present disclosure provides an application server, including:
a memory, a processor and a communication program stored in the memory and operable on the processor. The communication program implements the steps of the communication method in the second embodiment described above when executed by the processor.

### Seventh embodiment

An embodiment of the present disclosure provides user equipment, including:
a memory, a processor and a communication program stored in the memory and operable on the processor. The communication program implements the steps of the communication method in the third embodiment described above when executed by the processor.

### Eighth embodiment

An embodiment of the present disclosure provides a computer-readable storage medium storing a communication program therein, and the communication program, when executed by a processor, implements the steps of the communication method in the second embodiment described above.

### Ninth embodiment

An embodiment of the present disclosure provides a computer-readable storage medium storing a communication program herein, and the communication program, when executed by a processor, implements the steps of the communication method in the third embodiment described above.

### Example 1 (registration flow)

In the example, a mobile terminal (mobile phone) is taken as an example of UE, and a registration process of the mobile phone is described in the example. In a local UE, an APP and a VoLTE kernel are two independent entities in a mobile phone, the VoLTE kernel is called VoLTE for short, the APP needs to initiate registration with IMS using user identity of the VoLTE, and the IMS needs to be enhanced, so that the registrations of the APP and the VoLTE are separated. The VoLTE kernel is called VoLTE for short.

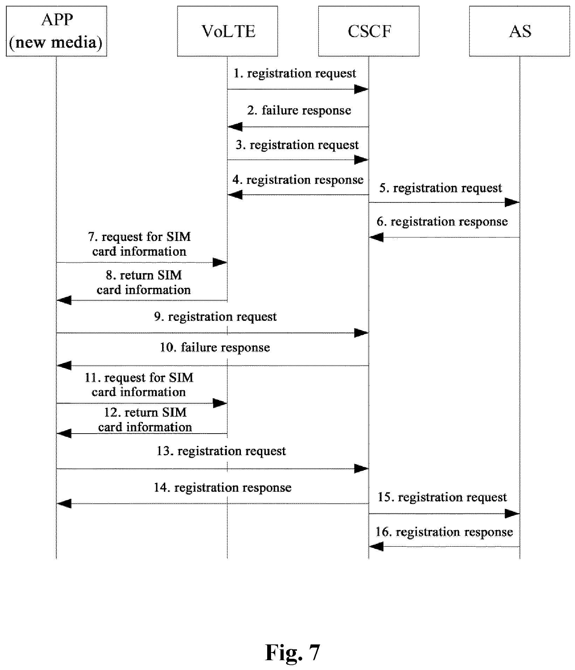

As shown in Fig. 7, a specific implementation process is as follows.
1) The VoLTE sends a registration request to the CSCF.
   The VoLTE also sends media support capability indication information of the VoLTE to the CSCF; the media support capability indication information of the VoLTE is used for indicating a media type supported by the VoLTE.
2) The CSCF returns a failure response carrying registration authentication information.
3) The VoLTE generates a registration request for authentication according to the registration authentication information returned by the CSCF and sends the registration request to the CSCF.
4) The CSCF returns a registration response (success).
5) The CSCF sends a registration request to the AS by using user identity information registered by the VoLTE, and achieves third-party registration of the user identity of the VoLTE in the AS.
6) The AS returns a registration response (success).
7) The APP also needs to register with the IMS at the moment, and firstly, the APP sends a request message for requesting SIM card information to the VoLTE to request to acquire the user identity of the VoLTE.
8) The VoLTE returns the user identity of the VoLTE to the APP.
9) The APP sends a registration request to the CSCF, and uses the user identity of the VoLTE for registration,
   wherein the APP also sends media support capability indication information of the APP to the CSCF; and the media support capability indication information of the APP is used for indicating a media type supported by the APP; and
   wherein a random number (instanceID) carried by the APP in the registration request is different from a random number carried during the registration of the VoLTE.
10) The CSCF returns a failure response carrying registration authentication information.
11) The APP sends a message for requesting for SIM card information to the VoLTE, the message carrying the registration authentication information.
12) The VoLTE returns registration authentication information to the APP.
13) The APP constructs a registration request message according to the registration authentication information returned by the VoLTE, and sends the registration request message to the CSCF.
14) The CSCF returns a registration response (success).
15) The CSCF sends a registration message carrying the corresponding instanceID to the AS by using user identity information registered by the APP, and achieves third-party registration of the APP in the AS.
16) The AS returns a registration response (success).

### Example 2 (basic flow-calling flow)

In the example, UE takes a mobile terminal (mobile phone) as an example, in a local UE, an APP and a VoLTE kernel are two independent entities in a mobile phone, and the VoLTE kernel is called VoLTE for short. A calling user initiates a call using the APP and the VoLTE, the VoLTE is used for bearing traditional media types, and the APP is used for bearing new media types. The traditional media and the new media herein have the concept of evolution, that is, the current new media is supported by the VoLTE with the development, and thus becomes a traditional media. The new media of the APP includes new media types which are continuously evolving and newly created.

It is to be noted that: calls of both the APP and the VoLTE are sent to CSCF and AS, but transmitted transparently by CSCF to AS, and therefore, CSCF is omitted from the flows in the following figures for simplicity.

It is to be noted that: the calling flow mainly discusses a calling part; and a called party (remote UE) is assumed to be a UE that supports both new media and traditional media.

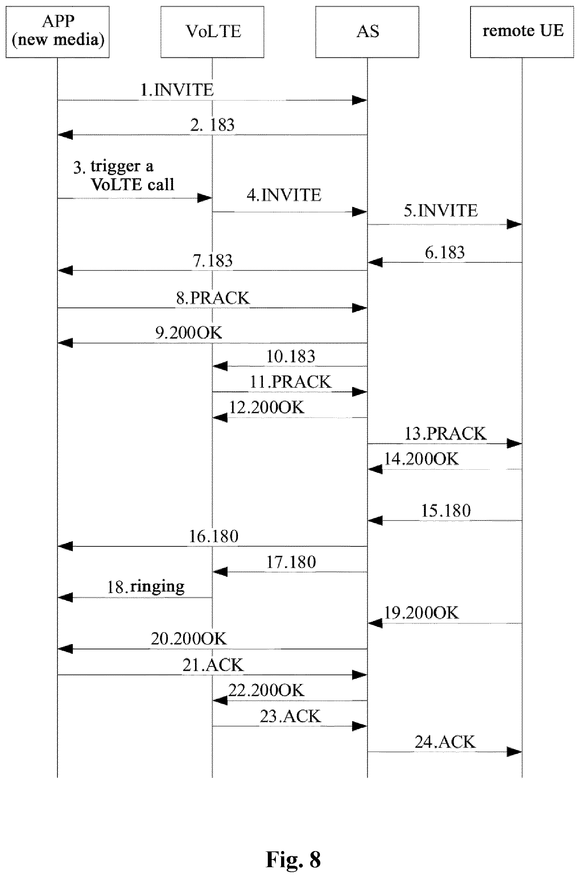

As shown in Fig. 8, a specific implementation process is as follows.
1) The APP initiates a call carrying a media description (Session Description Protocol; SDP for short) of a new media part, the call request carries a converged call identifier, and the identifier may carry a converged Session Call (ConvergedSessionCall) extension parameter in the call request.
2) The AS identifies the converged session call extension parameter and determines that the call only involves the new media part, so that the AS does not call out a called party but returns a provisional response (183 message) to the calling party at the moment.
3) After receiving the provisional response, the APP triggers a VoLTE call to prepare for calling out of the traditional media part.
4) The VoLTE initiates a call carrying a media description (SDP) of the traditional media part.
5) After receiving the call, the AS assembled the media description (SDP) of the new media part in the call request of the APP and the media description (SDP) of the traditional media part in the call request of the VoLTE, carries the assembled media description in an INVITE message and sends the INVITE message to the called party.
6) The called party returns a 183 message carrying a media description (SDP) of the called party to the AS.
7) The AS carries the new media part in the media description (SDP) returned by the called party in a 183 message and sends the 183 message to the APP.
8) The APP returns a PRACK message to the AS.
9) The AS returns a 200OK message (for the PRACK message sent from the APP) to the APP.
10) The AS carries a traditional media part in the media description (SDP) returned by the called party in a 183 message and sends the 183 message to the VoLTE.
11) The VoLTE returns a PRACK message to the AS.
12) The AS returns a 200OK message (for the PRACK message sent from the VoLTE) to the VoLTE.
13) The AS returns a PRACK message to the called party.
14) The called party returns a 200OK message (for the PRACK message sent from the AS) to the AS.
15) The called party rings and returns a 180 message to the AS.
16) The AS forwards the 180 ringing message to the APP.
17) The AS forwards the 180 ringing message to the VoLTE.
18) The VoLTE sends a ringing notification to the APP.
19) The called party is off-hooked and sends a 200OK message to the AS.
20) The AS forwards the 200OK message of off-hook to the APP.
21) The APP returns an ACK message to the AS.
22) The AS forwards the 200OK message of off-hook to the VoLTE.
23) The VoLTE returns an ACK message to the AS.
24) The AS returns an ACK message to the called party.

In this case, the call is established between the calling party and the called party, a media channel of the new media is established between the APP and the called party, and a media channel of the traditional media is established between the VoLTE and the called party.

### Example 3 (basic flow-called flow)

In the example, UE takes a mobile terminal (mobile phone) as an example, in a local UE, an APP and a VoLTE kernel are two independent entities in a mobile phone, and the VoLTE kernel is called VoLTE for short. The VoLTE is used for bearing traditional media types, and the APP is used for bearing new media types. The traditional media and the new media herein involve the concept of evolution, that is, the current new media is supported by the VoLTE with the development, and thus becomes a traditional media. The new media of the APP includes new media types which are continuously evolving and newly created. The called flow mainly discusses a called party; and a calling part (remote UE) is assumed to be a UE that supports both new media and traditional media.

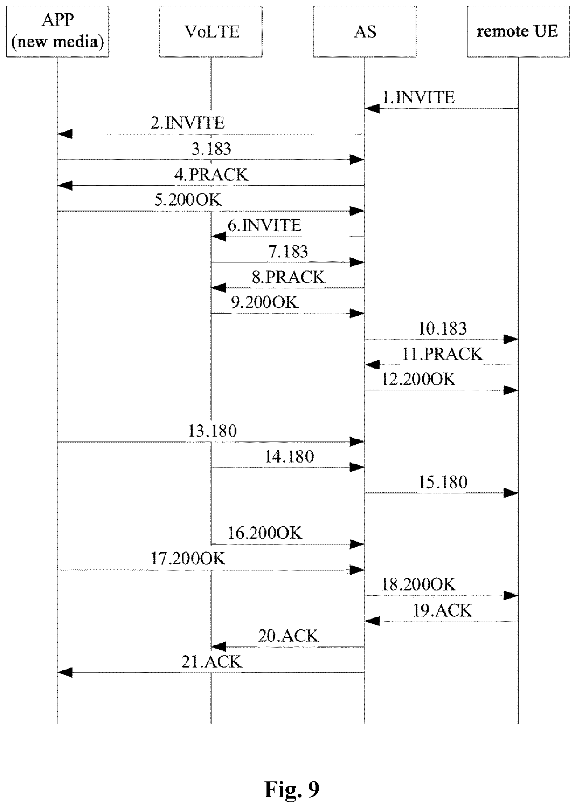

As shown in Fig. 9, a specific implementation process is as follows.
1) The remote UE initiates a call to the AS, and the call request carries the media description (SDP) of the new media part and the media description (SDP) of the traditional media part.
2) The AS carries the media description (SDP) of the new media part in the call request in an INVITE message and calls the APP.
3) The APP returns a 183 message carrying the media description (SDP) of the APP.
4) The AS returns a PRACK message to the APP.
5) The APP returns a 200 OK (for the PRACK message sent from the AS) to the AS.
6) The AS carries the media description (SDP) of the traditional media part in the call request in an INVITE message and calls the VoLTE.
7) The VoLTE returns a 183 message carrying the media description (SDP) of the VoLTE.
8) The AS returns a PRACK message to the VoLTE.
9) The VoLTE returns a 200 OK (for the PRACK message sent from the AS) to the AS.
10) The AS assembles the media descriptions (SDP) returned by the APP and the VoLTE, carries the assembled media description in a 183 message, and sends the 183 message to the remote UE.
11) The remote UE returns a PRACK message to the AS.
12) The AS returns a 200 OK message (for the PRACK message sent from the remote UE) to the remote UE.
13) The APP rings and sends a 180 message to the AS.
14) The VoLTE rings and sends a 180 message to the AS.
15) The AS forwards the 180 ringing message to the remote UE.
16) The VoLTE is off-hooked, and sends a 200 OK message of off-hook to the AS.
17) The APP is off-hooked, and sends a 200 OK message of off-hook to the AS.
18) The AS forwards the 200OK message of off-hook to the remote UE.
19) The remote UE returns an ACK message to the AS.
20) The AS forwards the ACK message to the VoLTE.
21) The AS forwards the ACK message to the APP.

In this case, the call is established between the calling party and the called party, a media channel of the new media is established between the APP and the calling party (remote UE), and a media channel of the traditional media is established between the VoLTE and the calling party (remote UE).

Remark: in step 1), in a case where the call request initiated by the remote UE only carries the traditional media part, the AS will only call the VoLTE, but not call the APP.

### Example 4 (video call scenario-calling flow)

The example illustrates a calling flow in a particular scenario. The scenario is a video call scenario, the traditional media is audio, and the new media is video. The problem that some mobile phone manufacturers do not provide a VoLTE video call function can be solved.

In the example, UE takes a mobile terminal (mobile phone) as an example, in a local UE, an APP and a VoLTE kernel are two independent entities in the mobile phone, and the VoLTE kernel is called VoLTE for short. A calling user initiates a call by using the APP and the VoLTE, the VoLTE is used for bearing audio, and the APP is used for bearing video.

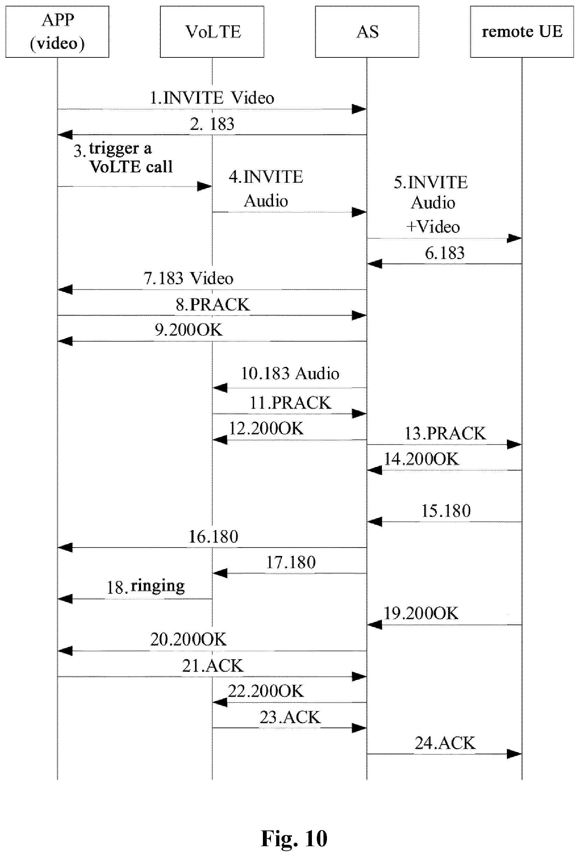

As shown in Fig. 10, a specific implementation process is as follows.
1) The APP initiates a call carrying a media description (SDP) of the video part, the call request carries a converged call identifier, and the identifier may carry a converged session call (ConvergedSessioncall) extension parameter in the call request.
2) The AS identifies the converged session call extension parameter and determines that the call only involves a video part, so that the AS does not call out a called party but returns a provisional response (183 message) to the calling party at the moment.
3) After receiving the provisional response, the APP triggers a VoLTE call to prepare for calling out the audio media part.
4) The VoLTE initiates a call carrying a media description (SDP) of the audio media part.
5) After receiving the call, the AS assembles the media description (SDP) of the video media part in the call request of the APP and the media description (SDP) of the audio media part in the call request of the VoLTE, carries the assembled media description in an INVITE message and sends the media description to the called party.
6) The called party returns a 183 message carrying a media description (SDP) of the called party to the AS.
7) The AS carries the video media part in the media description (SDP) returned by the called party in a 183 message and sends the 183 message to the APP.
8) The APP returns a PRACK message to the AS.
9) The AS returns a 200OK message (for the PRACK message sent from the APP) to the APP.
10) The AS carries the audio media part in the media description (SDP) returned by the called party in a 183 message and sends the 183 message to the VoLTE.
11) The VoLTE returns a PRACK message to the AS.
12) The AS returns a 200OK message (for the PRACK message sent from the VoLTE) to the VoLTE.
13) The AS returns a PRACK message to the called party.
14) The called party returns a 200OK message (for the PRACK message sent from the AS) to the AS.
15) The called party rings and returns a 180 message to the AS.
16) The AS forwards the 180 ringing message to the APP.
17) The AS forwards the 180 ringing message to the VoLTE.
18) The VoLTE sends a ringing notification to the APP.
19) The called party is off-hooked and sends a 200OK message to the AS.
20) The AS forwards the 200OK message of off-hook to the APP.
21) The APP returns an ACK message to the AS.
22) The AS forwards the 200OK message of off-hook to the VoLTE.
23) The VoLTE returns an ACK message to the AS.
24) The AS returns an ACK message to the called party.

In this case, the call is established between the calling party and the called party, a media channel of the video media is established between the APP and the called party, and a media channel of the audio media is established between the VoLTE and the called party.

### Example 5 (video call scenario-called flow)

The example illustrates a called flow in a particular scenario. The scenario is a video call scenario, the traditional media is audio, and the new media is video. The problem that some mobile phone manufacturers do not provide a VoLTE video call function can be solved.

In the example, UE takes a mobile terminal (mobile phone) as an example, in a local UE, an APP and a VoLTE kernel are two independent entities in the mobile phone, and the VoLTE kernel is called VoLTE for short. The called flow mainly discusses a called part, and the calling part is assumed to be a UE supporting both new media and traditional media.

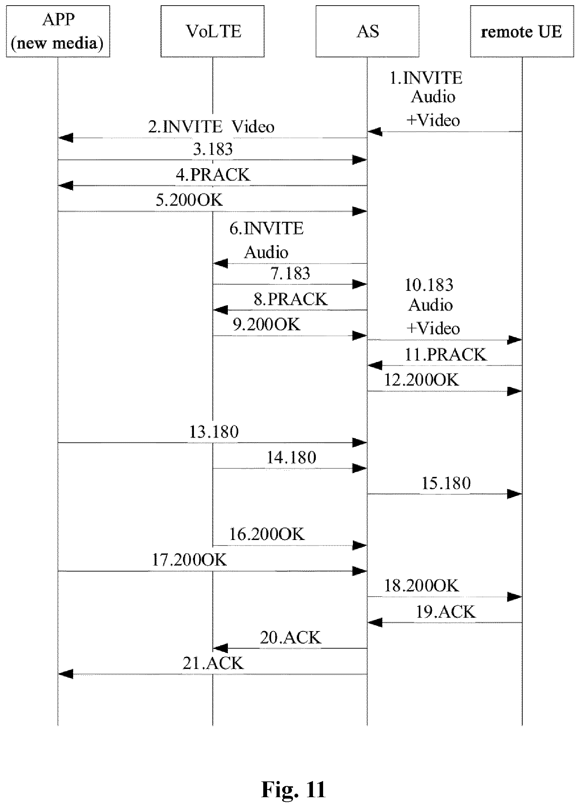

As shown in Fig. 11, a specific implementation process is as follows.
1) The remote UE initiates a call to the AS, and the call request carries a media description (SDP) of the video media part and a media description (SDP) of the audio media part.
2) The AS carries the media description (SDP) of the video media part in the call request in an INVITE message and calls the APP.
3) The APP returns a 183 message carrying a media description (SDP) of the APP to the AS.
4) The AS returns a PRACK message to the APP.
5) The APP returns a 200 OK (for the PRACK message sent from the AS) to the AS.
6) The AS carries the media description (SDP) of the audio media part in the call request in an INVITE message and calls the VoLTE.
7) The VoLTE returns a 183 message carrying a media description (SDP) of the VoLTE to the AS.
8) The AS returns a PRACK message to the VoLTE.
9) The VoLTE returns a 200 OK (for the PRACK message sent from the AS) to the AS.
10) The AS assembles the media descriptions (SDP) returned by the APP and the VoLTE, carries the assembled media description in a 183 message, and sends the 183 message to the remote UE.
11) The remote UE returns a PRACK message to the AS.
12) The AS returns a 200 OK message (for the PRACK message sent from the remote UE) to the remote UE.
13) The APP rings and sends a 180 message to the AS.
14) The VoLTE rings and sends a 180 message to the AS.
15) The AS forwards the 180 ringing message to the remote UE.
16) The VoLTE is off-hooked, and sends a 200 OK message of off-hook to the AS.
17) The APP is off-hooked, and sends a 200 OK message of off-hook to the AS.
18) The AS forwards the 200OK message of off-hook to the remote UE.
19) The remote UE returns an ACK message to the AS.
20) The AS forwards the ACK message to the VoLTE.
21) The AS forwards the ACK message to the APP.

In this case, the call is established between the calling party and the called party, a media channel of the video media is established between the APP and the calling party (remote UE), and a media channel of the audio media is established between the VoLTE and the calling party (remote UE).

Remark: in step 1), in a case where the call request initiated by the remote UE only carries an audio media part, the AS will only call the VoLTE, but not call the APP.

### Example 6 (flow of using APP converged call by both calling and called parties)

In the example, UE takes a mobile terminal (mobile phone) as an example, in a local UE and a remote UE, an APP and a VoLTE kernel are two independent entities in a mobile phone, and the VoLTE kernel is called VoLTE for short. The VoLTE is used for bearing a traditional media type, and the APP is used for bearing a new media type. The traditional media and the new media herein have the concept of evolution, that is, with the development, the current new media is supported by the VoLTE, and thus becomes a traditional media. The new media of the APP includes new media types which are continuously evolving and newly created.

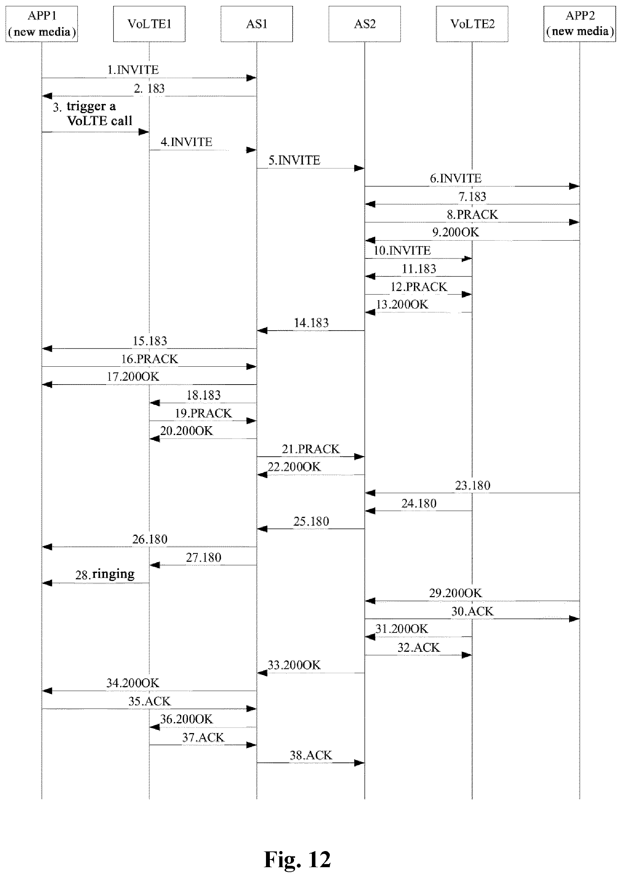

As shown in Fig. 12, a specific implementation process is as follows.
1) APP (APP 1) of calling UE initiates a call carrying a media description (SDP) of the new media part, the call request carries a converged call identifier, and the identifier may carry a converged session call (ConvergedSessionCall) extension parameter in the call request.
2) AS1 (calling AS) identifies the converged session call extension parameter, and determines that the call involves only the new media part, so that at this point, AS1 does not call a called party, but returns a provisional response (183 message) to the calling party.
3) After receiving the provisional response, the APP1 triggers a VoLTE (VoLTE 1) call to prepare for calling out the traditional media part.
4) The VoLTE1 initiates a call carrying a media description (SDP) of the traditional media part.
5) After receiving the call, the AS1 assembles the media description (SDP) of the new media part in the call request of the APP1 and the media description (SDP) of the traditional media part in the call request of the VoLTE1, carries the assembled media description in an INVITE message, and sends the INVITE message to the called AS (AS2).
6) The AS2 carries, in an INVITE message, the media description (SDP) of the new media part in the call request, and calls the APP (APP2) of the called UE.
7) The APP2 returns a 183 message carrying a media description (SDP) of the APP 2 to the AS2.
8) The AS2 returns a PRACK message to the APP 2.
9) The APP2 returns a 200OK message (for the PRACK message sent from the AS2) to the AS2.
10) The AS2 carries, in an INVITE message, the media description (SDP) of the traditional media part in the call request, and calls the VoLTE2.
11) The VoLTE2 returns a 183 message carrying a media description (SDP) of the VoLTE2 to the AS2.
12) The AS2 returns a PRACK message to the VoLTE2.
13) The VoLTE2 returns a 200OK message (for the PRACK message sent from the AS2) to the AS2.
14) The AS2 returns a 183 message carrying a new media description (SDP) and a conventional media description (SDP) of the called party to the AS1.
15) The AS1 carries, in a 183 message, the new media part in the media description (SDP) returned by the called party and sends the 183 message to the APP (APP 1) of the calling UE.
16) The APP1 returns a PRACK message to the AS 1.
17) The AS1 returns a 200OK message (for the PRACK message sent from the APP 1) to the APP 1.
18) The AS1 carries, in a 183 message, the traditional media part in the media description (SDP) returned by the called party and sends the 183 message to the VoLTE (VoLTE 1) of the calling UE.
19) The VoLTE1 returns a PRACK message to the AS 1.
20) The AS1 returns a 200OK message (for the PRACK message sent from the VoLTE 1) to the VoLTE 1.
21) The AS1 returns a PRACK message to the called AS (AS2).
22) The called AS (AS2) returns a 200OK message (for the PRACK message sent from the AS1) to the AS1.
23) The APP (APP2) of the called UE rings and returns a 180 message to the AS2.
24) The VoLTE (VoLTE2) of the called UE rings and returns a 180 message to the AS2.
25) The AS2 forwards the 180 ringing message to the AS1.
26) The AS1 forwards the 180 ringing message to the APP1.
27) The AS1 forwards the 180 ringing message to the VoLTE1.
28) The VoLTE1 sends a ring notification to the APP1.
29) The APP (APP2) of the called UE is off-hooked and sends a 200OK message to the AS2.
30) The AS2 returns an ACK message to the APP2.
31) The VoLTE (VoLTE2) of the called UE is off-hooked, and sends a 200OK message to the AS2.
32) The AS2 returns an ACK message to the VoLTE2.
33) The AS2 forwards the 200OK message of off-hook to the AS1.
34) The AS1 forwards the 200OK message of off-hook to the APP (APP1) of the calling UE.
35) The APP1 returns an ACK message to the AS1.
36) The AS1 forwards the 200OK message of off-hook to the VoLTE (VoLTE1) of the calling UE.
37) The VoLTE1 returns an ACK message to the AS1.
38) The AS1 returns an ACK message to the AS2.

In this case, the call is established between the calling party and the called party, and a media channel of the new media is established between a calling APP (APP of the calling UE) and a called APP (APP of the called UE); and a media channel of the traditional media is established between a calling VoLTE (VoLTE of the calling UE) and a called VoLTE (VoLTE of the called UE).

### Example 7 (flow of rejecting new media by remote UE)

In the example, UE takes a mobile terminal (mobile phone) as an example, in a local UE, an APP and a VoLTE kernel are two independent entities in a mobile phone, and the VoLTE kernel is called VoLTE for short. The VoLTE is used for bearing a traditional media type, and the APP is used for bearing a new media type. The traditional media and the new media herein have the concept of evolution, that is, with the development, the current new media is supported by the VoLTE, and thus becomes a traditional media. The new media of the APP includes new media types which are continuously evolving and newly created.

In the example, a called party (remote UE) may reject the new media part, for example, the called party supports only the traditional VoLTE and does not support the APP, and the calling party (local UE) is assumed to be UE that supports both new media and traditional media.

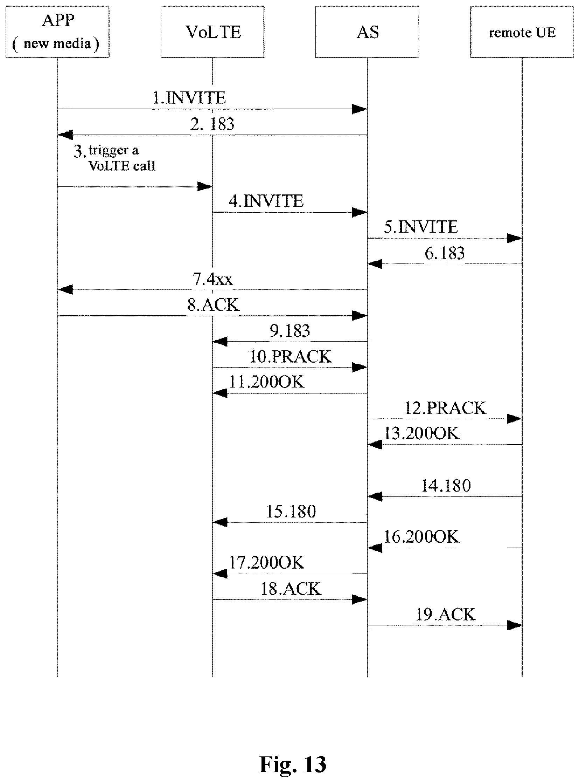

As shown in Fig. 13, a specific implementation process is as follows.
1) The APP initiates a call carrying a media description (SDP) of the new media part, the call request carries a converged call identifier, and the identifier may carry a converged session call (ConvergedSessionCall) extension parameter in the call request.
2) The AS identifies the converged session call extension parameter and determines that the call involves only the new media part, so that the AS does not call out a called party but returns a provisional response (183 message) to the calling party at the moment.
3) After receiving the provisional response, the APP triggers a VoLTE call to prepare for calling out the traditional media part.
4) The VoLTE initiates a call carrying a media description (SDP) of the traditional media part.
5) After receiving the call, the AS assembles the media description (SDP) of the new media part in the call request of the APP and the media description (SDP) of the traditional media part in the call request of the VoLTE, carries the assembled media description in an INVITE message and sends the INVITE message to the called party.
6) The called party returns a 183 message carrying a media description (SDP) of the called party to the AS, wherein the called party rejects the media description of the new media.
7) The AS returns a 4xx message to the APP.
8) The APP returns an ACK message to the AS.
9) The AS carries, in a 183 message, the traditional media part in the media description (SDP) returned by the called party and sends the 183 message to the VoLTE (VoLTE of the calling party).
10) The VoLTE sends a PRACK message to the AS.
11) The AS sends back a 200OK message (for the PRACK message sent from the VoLTE) to the VoLTE.
12) The AS returns a PRACK message to the called party.
13) The called party sends back a 200OK message (for the PRACK message sent from the AS) to the AS.
14) The called party rings and returns a 180 message to the AS.
15) The AS forwards the 180 ringing message to the VoLTE (VoLTE of the calling party).
16) The called party is off-hooked and sends a 200OK message to the AS.
17) The AS forwards the 200OK message of off-hook to the VoLTE (VoLTE of the calling party).
18) The VoLTE sends an ACK message to the AS.
19) The AS returns an ACK message to the called party.

In this case, the call is established between the calling party and the called party, and a media channel of the traditional media is established between the VoLTE and the called party.

### Example 8 (flow of closing new media)

After the call is established, the calling party or the called party (the called party is taken as an example in the flow) may close the new media part.

In the example, UE takes a mobile terminal (mobile phone) as an example, in a local UE, an APP and a VoLTE kernel are two independent entities in a mobile phone, and the VoLTE kernel is called VoLTE for short. The VoLTE is used for bearing a traditional media type, and the APP is used for bearing a new media type. The traditional media and the new media herein have the concept of evolution, that is, with the development, the current new media is supported by the VoLTE, and thus becomes a traditional media. The new media of the APP includes new media types which are continuously evolving and newly created.

In the example, the called party (remote UE) may close the new media part after a call is established.

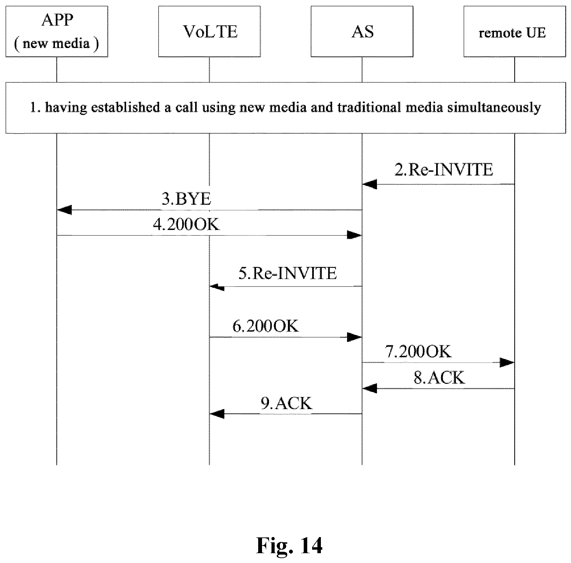

As shown in Fig. 14, a specific implementation process is as follows.
1) The calling party and the called party have established a call using simultaneously the new media and the traditional media.
2) The called UE wants to close the new media part, and sends to AS a Re-INVITE message, in which the media description of the new media part is closed.
3) The AS sends a BYE message to APP of the calling UE to close the new media part.
4) The APP of the calling UE returns a 200OK message to the AS.
5) The AS sends, to VoLTE of the calling UE, a Re-INVITE message carrying the media description (SDP) of the traditional media part of the called party.
6) The VoLTE sends back a 200OK message to the AS.
7) The AS forwards the 200OK message to the called party.
8) The called party sends an ACK message.
9) The AS forwards the ACK message to the calling VoLTE.

### Example 9 (multi-party call flow)

Generally, the VoLTE in the related art does not support a multi-stream multi-party video, so the APP and VoLTE converged mode provided by the present disclosure is of great significance to popularization of the multi-stream multi-party video. For a multi-stream multi-party video scenario, the new media server is a Relay Server and is used for copying and distributing video streams.

In the example, UE takes a mobile terminal (mobile phone) as an example, an APP and a VoLTE kernel are two independent entities in a mobile phone, and the VoLTE kernel is called VoLTE for short. The VoLTE is used for bearing a traditional media type, and the APP is used for bearing a new media type. The traditional media and the new media herein have the concept of evolution, that is, with the development, the current new media is supported by the VoLTE, and thus becomes a traditional media. The new media of the APP includes new media types which are continuously evolving and newly created.

In the example, the conference chairman part (UE1) is mainly described, and UE1 supports both new media and traditional media by adopting the APP and VoLTE converged mode; and conference members are assumed to be UE (e.g., UE2, UE 3) that support both new media and traditional media.

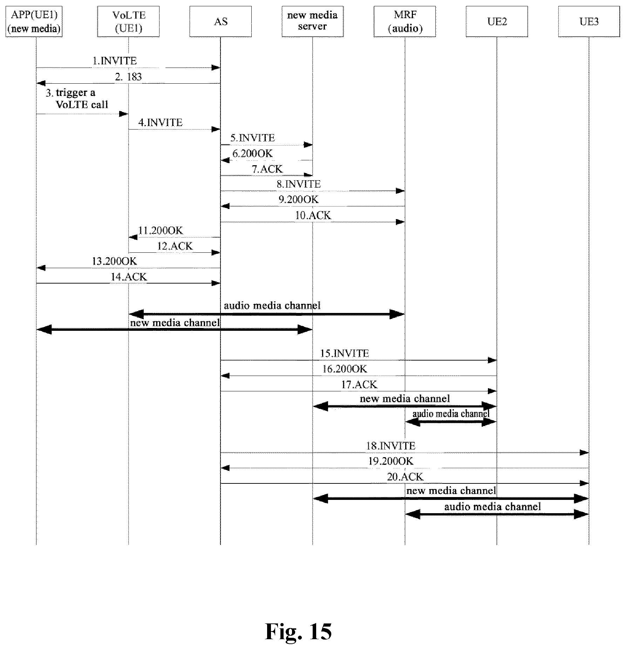

As shown in Fig. 15, a specific implementation process is as follows.
1) APP (APP of the UE 1) initiates a call carrying a media description (SDP) of the new media part, the call request carries a converged call identifier, and the identifier may carry a converged session call (ConvergedSessionCall) extension parameter in the call request.
2) AS identifies the converged session call extension parameter and determines that the call involves only the new media part, so that the AS does not call out a called party but returns a provisional response (183 message) to the calling party at the moment.
3) After receiving the provisional response, the APP triggers a VoLTE call to prepare for calling out the traditional media part.
4) The VoLTE initiates a call carrying a media description (SDP) of the traditional media part.
5) The AS sends, to the new media server (relay server), a call request carrying the media description (SDP) of the new media part in the call request of the APP.
6) The new media server returns to the AS a 200 OK message, in which a media description (SDP) of a new media supported by the new media server is carried.
7) The AS returns an ACK to the new media server; and at the moment, the media channel of the new media part of the APP is connected to the new media server.
8) The AS calls MRF, with a media description (SDP) of the traditional media part in the call request of the VoLTE (VoLTE of UE1) carried.
9) The MRF sends back to the AS a 200OK message, in which a media description (SDP) of a traditional media supported by the MRF is carried.
10) The AS returns an ACK to the MRF; at this time, the media channel of the traditional media part of the VoLTE is connected to the MRF.
11) The AS returns to the VoLTE a 200OK message carrying the media description (SDP) of the traditional media supported by the MRF.
12) The VoLTE sends an ACK back to the AS.
13) The AS returns to the APP a 200OK message, in which the media description (SDP) of the new media supported by the new media server is carried.
14) The APP returns an ACK message to the AS.
   The audio channel of the chairman of the multi-party conference is established between the VoLTE and the MRF; and the new media channel of the chairman of the multi-party conference is established between the APP and the new media server.
15) The AS calls UE2 using the media descriptions of MRF and the new media server.
16) The UE2 returns to the AS a 200OK message carrying a media description (SDP) of the UE2.
17) The AS sends an ACK message back to the UE2.
   The audio channel of the UE2 is established between the UE2 and the audio MRF; and the new media channel of the UE2 is established between UE2 and the new media server.
18) The AS calls UE3 using the media descriptions of MRF and the new media server.
19) The UE3 returns to the AS a 200OK message carrying a media description (SDP) of the UE3.
20) The AS sends an ACK message back to the UE 3.

The audio channel of the UE3 is established between the UE3 and the MRF; and the new media channel of the UE3 is established between the UE3 and the new media server.

### Example 10 (third-party application call flow)

Generally, the VoLTE in the related art does not support new application forms, such as remote education, live broadcasting and the like, so the APP and VoLTE converged mode provided by the present disclosure is of great significance to popularization of the multi-stream multi-party video.

In the example, UE takes a mobile terminal (mobile phone) as an example, an APP and a VoLTE kernel are two independent entities in a mobile phone, and the VoLTE kernel is called VoLTE for short. The VoLTE is used for bearing a traditional media type, and the APP is used for bearing a new media type. The traditional media and the new media herein have the concept of evolution, that is, with the development, the current new media is supported by the VoLTE, and thus becomes a traditional media. The new media of the APP includes new media types which are continuously evolving and newly created.

In the example, the calling party is mainly described, and the called party (remote UE) is assumed to be UE that supports both new media and traditional media.

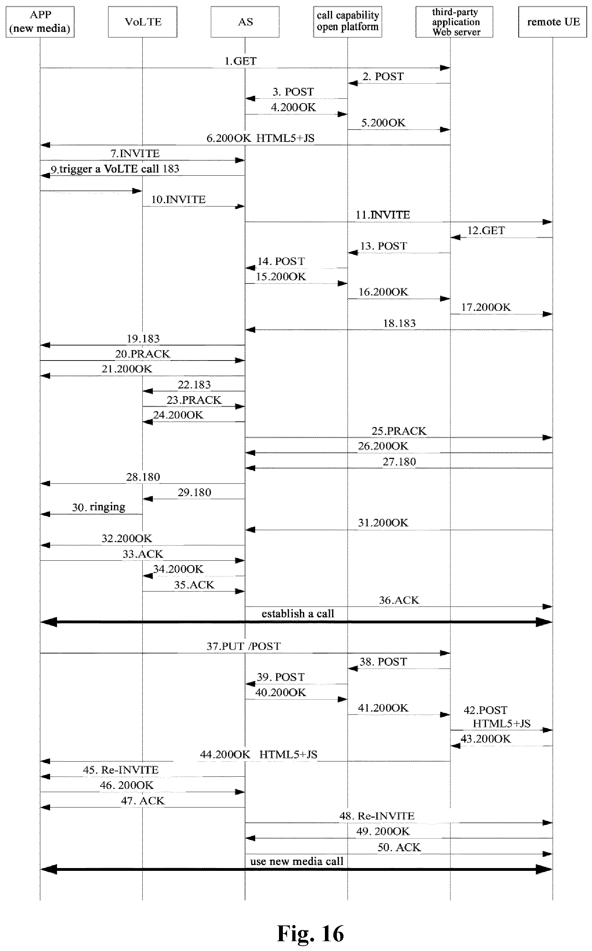

As shown in Fig. 16, a specific implementation process is as follows.
1) APP sends to a third-party application (Web Server) a GET request carrying a user identity and an application identifier (Uniform Resource Identifier (URI) of the current request may serve as the application identifier) corresponding to the APP and requests for a page and a script used by the application by using HTTP (Hypertext Transfer Protocol).
2) A third-party application (Web Server) sends a POST to a call capability open platform according to the request of the APP, the POST carrying the user identity and the application identifier.
3) The call capability open platform forwards the POST to the AS.
4) The AS returns a 200OK message, in which a user page parameter such as a type of a usable new medium is carried, to the call capability open platform according to the user identity and the application identifier.
5) The call capability open platform forwards the 200OK message to the third-party application (Web Server).
6) The third-party application (Web Server) returns the page and the script to the APP according to the 200OK message.
   Here, the page is, for example, a HTML (HyperText Markup Language) 5-based page, and the script is, for example, js (javascript).
7) The APP presents the page of the application, such as a Web page of remote education, and simultaneously initiates a call to the AS, the call carrying user page indication information.
   The user page indication information is used for indicating information of a user page of the second user equipment. For example, the user page indication information is a URL (Uniform Resource Locator).
8) The AS returns a provisional response (183 message) to the APP.
9) The APP triggers the VoLTE to send a call of the traditional media.
10) The VoLTE sends an INVITE message to the AS.
11) The AS assembles the media descriptions of the APP and the VoLTE, and sends an INVITE message carrying the user page indication information to the called party.
12) The called party sends a GET to the third-party application (Web Server) according to indication of the user page indication information to request for acceptance of the page and the script corresponding to the call request.
13) The third-party application (Web Server) sends a POST carrying the user identity to the call capability open platform according to the request of the called UE.
14) The call capability open platform forwards the POST to the AS.
15) The AS returns, to the call capability open platform according to the user identity and the application identifier, a 200OK message carrying the user page parameter such as the type of a usable new medium.
16) The call capability open platform forwards the 200 OK message to the third-party application (Web Server).
17) The third-party application (Web Server) returns the page and the script to the called UE according to the 200 OK message.
18) The called UE returns a 183 message of the call request carrying media descriptions of the new media part and the traditional media part of the called UE.
19) The AS carries the media description of the new media part of the called party in a 183 message and forwards the 183 message to the APP.
20) The APP returns a PRACK message to the AS.
21) The AS returns a 200OK message (for the PRACK message sent from the APP) to the APP.
22) The AS carries the media description of the traditional media part of the called party in a 183 message and forwards the 183 message to the VoLTE.
23) The VoLTE returns a PRACK message to the AS.
24) The AS returns a 200OK message (for the PRACK message sent from the VoLTE) to the VoLTE.
25) The AS returns a PRACK message to the called UE.
26) The called UE returns a 200OK message (for the PRACK message sent from the AS) to the AS.
27) The called party rings and returns a 180 message to the AS.
28) The AS forwards the 180 message to the APP.
29) The AS forwards the 180 message to the VoLTE.
30) The VoLTE sends a ringing notification to the APP.
31) The called party is off-hooked and sends a 200OK message to the AS.
32) The AS forwards the 200OK message of off-hook to the APP.
33) The APP returns an ACK message to the AS.
34) The AS forwards the 200OK message of off-hook to the VoLTE.
35) The VoLTE returns an ACK message.
36) The AS returns an ACK message to the called party; and a call of the new application is established between the calling party and the called party.
37) In the use of the application, a user may change the media channel, for example, add a media stream (e.g., stream corresponding to a live application), through an operation on a Web page. A calling user is taken as an example, the calling user adds a media stream through an operation on an interface, and the APP sends a request (PUT or POST request) to the third-party application (Web Server).
38) The third-party application (Web Server) sends a POST carrying the user identity to the call capability open platform according to the request of the APP.
39) The call capability open platform forwards the POST to the AS.
40) The AS returns a user page parameter, such as a type of a usable new media, in a 200OK message according to the user identity and the application identifier.
41) The call capability open platform forwards the 200OK message to the third-party application (Web Server).
42) The third-party application (Web Server) sends a POST carrying new page and script to the called UE according to the 200OK message.
   Here, the page is a HTML (HyperText Markup Language) 5-based page for example, and the script is js (Javascript) for example.
43) The called UE returns a 200OK message the third-party application.
44) The third-party application (Web Server) sends a 200OK message to the calling APP to return the new page and script to the APP.
45) The AS sends, to the calling APP, a Re-INVITE carrying a media description corresponding to the added media stream.
46) The APP (calling APP) returns a 200OK message to the AS.
47) The AS returns an ACK message to the APP.
48) The AS sends, to the called UE, a Re-INVITE carrying the media description corresponding to the added media stream.
49) The called UE returns a 200OK message to the AS.
50) The AS returns an ACK message to the called UE.

The calling party and the called party can use the added media stream at the moment.

It should be noted that the present disclosure may have other and further embodiments, for those skilled in the art, various modifications and variations may be made based on the present disclosure without departing from the essence of the present disclosure, and these modifications and variations should fall within the scope of the claims appended to the present disclosure.

### Industrial applicability

According to a communication method and device, an application server, user equipment, and a system provided in some embodiments of the present disclosure, the application server receives a first call request sent from an application (APP) module of first user equipment, receives a second call request sent from a kernel module of the first user equipment when it is determined that the first call request carries a converged call identifier, establishes a first media channel between the APP module of the first user equipment and second user equipment to conduct a first media call, and establishes a second media channel between the kernel module of the first user equipment and the second user equipment to conduct a second media call. The solution can solve the problem that promotion and popularization of a new IMS function are limited by inconsistent capabilities of terminals, and with the enhancement of the IMS network side, the APP and the VoLTE kernel are combined to be able to support new future-oriented IMS functions, and therefore good industrial practicability is achieved.

## Claims

1. A communication method, comprising:
receiving a first call request sent from an application APP module of first user equipment;
when it is determined that the first call request carries a converged call identifier, receiving a second call request sent from a kernel module of the first user equipment, establishing a first media channel between the APP module of the first user equipment and second user equipment so as to conduct a first media call, and establishing a second media channel between the kernel module of the first user equipment and the second user equipment so as to conduct a second media call.

2. The method of claim 1, wherein:
establishing the first media channel between the APP module of the first user equipment and the second user equipment so as to conduct the first media call comprises:
acquiring a media description of the first media call of the first user equipment from the first call request and sending the media description to the second user equipment;
receiving a media description of the first media call of the second user equipment fed back by the second user equipment on the media description of the first media call of the first user equipment; and
sending the media description of the first media call of the second user equipment to the APP module of the first user equipment.

3. The method of claim 1, wherein:
establishing the second media channel between the kernel module of the first user equipment and the second user equipment so as to conduct the second media call comprises:
acquiring a media description of the second media call of the first user equipment from the second call request and sending the media description to the second user equipment;
receiving a media description of the second media call of the second user equipment fed back by the second user equipment on the media description of the second media call of the first user equipment; and
sending the media description of the second media call of the second user equipment to the kernel module of the first user equipment.

4. The method of claim 2, wherein:
establishing the first media channel between the APP module of the first user equipment and the second user equipment so as to conduct the first media call comprises:
when it is determined that a kernel module of the second user equipment supports the first media call, acquiring the media description of the first media call of the first user equipment from the first call request and sending the media description to the kernel module of the second user equipment;
receiving a media description of the first media call of the second user equipment fed back by the kernel module of the second user equipment on the media description of the first media call of the first user equipment; and
sending the media description of the first media call of the second user equipment to the APP module of the first user equipment.

5. The method of claim 2, wherein:
establishing the first media channel between the APP module of the first user equipment and the second user equipment so as to conduct the first media call comprises:
when it is determined that the kernel module of the second user equipment does not support the first media call and an APP module of the second user equipment supports the first media call, acquiring the media description of the first media call of the first user equipment from the first call request and sending the media description to the APP module of the second user equipment;
receiving a media description of the first media call of the second user equipment fed back by the APP module of the second user equipment on the media description of the first media call of the first user equipment; and
sending the media description of the first media call of the second user equipment to the APP module of the first user equipment.

6. The method of claim 1, wherein:
establishing the first media channel between the APP module of the first user equipment and the second user equipment so as to conduct the first media call comprises:
acquiring the media description of the first media call of the first user equipment from the first call request and sending the media description to the second user equipment;
receiving a media description of the first media call of the second user equipment fed back by the second user equipment on the media description of the first media call of the first user equipment; and
if the media description of the first media call of the second user equipment indicates that the second user equipment rejects the first media call, sending indication information indicating that the second user equipment rejects the first media call to the APP module of the first user equipment to indicate failure to establish the first media channel.

7. The method of claim 1, further comprising:
after the first media call and the second media call are established between the first user equipment and the second user equipment, if indication information for closing the first media channel sent from the APP module of the first user equipment is received, sending the indication information for closing the first media channel to the second user equipment; or
after the first media call and the second media call are established between the first user equipment and the second user equipment, if indication information for closing the first media channel sent from the second user equipment is received, sending the indication information for closing the first media channel to the APP module of the first user equipment.

8. The method of claim 1, wherein:
establishing the first media channel between the APP module of the first user equipment and the second user equipment so as to conduct the first media call, and establishing the second media channel between the kernel module of the first user equipment and the second user equipment so as to perform the second media call comprises:
establishing a calling part of the first media channel between the APP module of the first user equipment and a new media server, and establishing a called part of the first media channel between the new media server and the second user equipment; and
establishing a calling part of the second media channel between the kernel module of the first user equipment and a Media Resource Function MRF and establishing a called part of the second media channel between the MRF and the second user equipment.

9. The method of claim 8, wherein:
establishing the calling part of the first media channel between the APP module of the first user equipment and the new media server comprises:
acquiring a media description of the first media call of the first user equipment from the first call request and sending the media description to the new media server;
receiving a media description of the first media call of the new media server fed back by the new media server on the media description of the first media call of the first user equipment; and
sending the media description of the first media call of the new media server to the APP module of the first user equipment, and
establishing the called part of the first media channel between the new media server and the second user equipment comprises:
sending the media description of the first media call of the new media server to the second user equipment;
receiving a media description of the first media call of the second user equipment fed back by the second user equipment on the media description of the first media call of the new media server; and
sending the media description of the first media call of the second user equipment to the new media server.

10. The method of claim 8, wherein:
establishing the calling part of the second media channel between the kernel module of the first user equipment and the Media Resource Function (MRF) comprises:
acquiring a media description of the second media call of the first user equipment from the second call request and sending the media description to the MRF;
receiving a media description of the second media call of the MRF fed back by the MRF on the media description of the second media call of the first user equipment; and
sending the media description of the second media call of the MRF to the kernel module of the first user equipment, and
establishing the called part of the second media channel between the MRF and the second user equipment comprises:
sending the media description of the second media call of the MRF to the second user equipment;
receiving a media description of the second media call of the second user equipment fed back by the second user equipment on the media description of the second media call of the MRF; and
sending the media description of the second media call of the second user equipment to the MRF.

11. The method of claim 8 or 9, wherein:
at least one second user equipment is provided;
in the case of a plurality of the second user equipments, establishing the called part of the first media channel between the new media server and the second user equipment comprises: establishing a called part of the first media channel between the new media server and the second user equipment for each second user equipment.

12. The method of claim 1, wherein:
before receiving the first call request sent from the application APP module of the first user equipment, the method further comprises:
after receiving a query request of a third-party application server for querying a user page parameter of the first user equipment, sending the user page parameter of the first user equipment to the third-party application server.

13. The method of claim 12, wherein:
establishing the first media channel between the APP module of the first user equipment and the second user equipment so as to conduct the first media call comprises:
acquiring a media description of the first media call of the first user equipment and user page indication information from the first call request, wherein the user page indication information is used for indicating information of a user page of the second user equipment;
sending the media description of the first media call of the first user equipment and the user page indication information to the second user equipment;
receiving a media description of the first media call of the second user equipment fed back by the second user equipment on the media description of the first media call of the first user equipment; and
sending the media description of the first media call of the second user equipment to the APP module of the first user equipment.

14. The method of claim 13, wherein:
after sending the media description of the first media call of the first user equipment and the user page indication information to the second user equipment, the method further comprises:
after receiving a query request of the third-party application server for querying a user page parameter of the second user equipment, sending the user page parameter of the second user equipment to the third-party application server.

15. The method of claim 14, wherein:
after the first media call and the second media call are established between first user equipment and the second user equipment, the method further comprises:
after receiving a query request of the third-party application server for querying a user page parameter corresponding to a newly-added media stream of the first user equipment, sending the user page parameter corresponding to the newly-added media stream of the first user equipment to the third-party application server;
after receiving a query request of the third-party application server for querying a user page parameter corresponding to a newly-added media stream of the second user equipment, sending the user page parameter corresponding to the newly-added media stream of the second user equipment to the third-party application server; and
sending a media description of the newly-added media stream of the first user equipment to the APP module of the first user equipment, and sending a media description of the newly-added media stream of the second user equipment to the second user equipment.

16. The method of any one of claims 1 to 10, wherein:
the first media comprises: a video media; and
the second media comprises: an audio media.

17. A communication device, comprising:
a first communication module configured to receive a first call request sent from an application APP module of first user equipment;
a second communication module configured to receive a second call request sent from a kernel module of the first user equipment when it is determined that the first call request carries a converged call identifier; and
a third communication module configured to establish a first media channel between the APP module of the first user equipment and second user equipment so as to conduct a first media call, and establish a second media channel between the kernel module of the first user equipment and the second user equipment so as to conduct a second media call.

18. The device of claim 17, wherein:
the third communication module is configured to establish the first media channel between the APP module of the first user equipment and the second user equipment so as to conduct the first media call by: acquiring a media description of the first media call of the first user equipment from the first call request and sending the media description to the second user equipment; receiving a media description of the first media call of the second user equipment fed back by the second user equipment on the media description of the first media call of the first user equipment; and sending the media description of the first media call of the second user equipment to the APP module of the first user equipment; and
the third communication module is configured to establish the second media channel between the kernel module of the first user equipment and the second user equipment so as to conduct the second media call by: acquiring a media description of the second media call of the first user equipment from the second call request and sending the media description to the second user equipment; receiving a media description of the second media call of the second user equipment fed back by the second user equipment on the media description of the second media call of the first user equipment; and sending the media description of the second media call of the second user equipment to the kernel module of the first user equipment.

19. The device of claim 17, wherein:
the third communication module is configured to establish the first media channel between the APP module of the first user equipment and the second user equipment so as to conduct the first media call, and establish the second media channel between the kernel module of the first user equipment and the second user equipment so as to conduct the second media call by: establishing a calling part of the first media channel between the APP module of the first user equipment and a new media server, and establishing a called part of the first media channel between the new media server and the second user equipment; and establishing a calling part of the second media channel between the kernel module of the first user equipment and a Media Resource Function MRF and establishing a called part of the second media channel between the MRF and the second user equipment.

20. The device of claim 17, further comprising
a fourth communication module configured to receive a query request of a third-party application server for querying a user page parameter of the first user equipment and send the user page parameter of the first user equipment to the third-party application server; receive a query request of the third-party application server for querying a user page parameter of the second user equipment, and send the user page parameter of the second user equipment to the third-party application server;
wherein the third communication module is configured to establish the first media channel between the APP module of the first user equipment and the second user equipment so as to conduct the first media call by: acquiring a media description of the first media call of the first user equipment and user page indication information from the first call request, wherein the user page indication information is used for indicating information of a user page of the second user equipment; sending the media description of the first media call of the first user equipment and the user page indication information to the second user equipment; receiving a media description of the first media call of the second user equipment fed back by the second user equipment on the media description of the first media call of the first user equipment; and sending the media description of the first media call of the second user equipment to the APP module of the first user equipment.

21. An application server, comprising:
a memory, a processor and a communication program stored in the memory and executable on the processor, wherein the communication program, when executed by the processor, implements steps of the communication method of any one of claims 1 to 16.

22. A computer-readable storage medium, wherein a communication program is stored in the computer readable storage medium, and the communication program, when executed by a processor, implements steps of the communication method of any one of claims 1 to 16.

23. A communication method, comprising:
sending a first call request to an application server through an application APP module of first user equipment, wherein the first call request carries a converged call identifier; establishing a first media channel between the APP module of the first user equipment and second user equipment so as to conduct a first media call; and
sending a second call request to the application server through a kernel module of the first user equipment; and establishing a second media channel between the kernel module of the first user equipment and the second user equipment so as to conduct a second media call.

24. The method of claim 23, wherein:
establishing the first media channel between the APP module of the first user equipment and the second user equipment so as to conduct the first media call comprises:
sending, by the APP module of the first user equipment, a media description of the first media call of the first user equipment to the second user equipment through the application server; and
receiving, by the APP module of the first user equipment, a media description of the first media call of the second user equipment fed back by the second user equipment on the media description of the first media call of the first user equipment through the application server.

25. The method of claim 23, wherein:
establishing the second media channel between the kernel module of the first user equipment and the second user equipment so as to conduct the second media call comprises:
sending, by the kernel module of the first user equipment, a media description of the second media call of the first user equipment to the second user equipment through the application server; and
receiving, by the kernel module of the first user equipment, a media description of the second media call of the second user equipment fed back by the second user equipment on the media description of the second media call of the first user equipment through the application server.

26. The method of claim 23, wherein:
establishing the first media channel between the APP module of the first user equipment and the second user equipment so as to conduct the first media call comprises:
sending, by the APP module of the first user equipment, a media description of the first media call of the first user equipment to the second user equipment through the application server;
receiving, by the APP module of the first user equipment, a media description of the first media call of the second user equipment fed back by the second user equipment on the media description of the first media call of the first user equipment through the application server, and stopping establishing the first media channel between the APP module of the first user equipment and the second user equipment if the media description of the first media call of the second user equipment indicates that the second user equipment rejects the first media call.

27. The method of claim 23, wherein:
after the first media call and the second media call are established between the first user equipment and the second user equipment, if the first media channel is required to be closed, indicating information for closing the first media channel is sent to the application server through the APP module, and the application server forwards the indicating information for closing the first media channel to the second user equipment to end the first media call; or
after the first media call and the second media call are established between the first user equipment and the second user equipment, if indication information for closing the first media channel sent from the second user equipment is received, the first media call is ended.

28. The method of claim 23, wherein:
establishing the first media channel between the APP module of the first user equipment and the second user equipment so as to conduct the first media call comprises:
sending, by the APP module of the first user equipment, a media description of the first media call of the first user equipment to a new media server through an application server; and
receiving, by the APP module of the first user equipment, a media description of the first media call of the new media server fed back by the new media server on the media description of the first media call of the first user equipment through the application server.

29. The method of claim 23, wherein:
establishing the second media channel between the kernel module of the first user equipment and the second user equipment so as to conduct the second media call comprises:
sending, by the kernel module of the first user equipment, a media description of the second media call of the first user equipment to a Media Resource Function MRF through the application server; and
receiving, by the kernel module of the first user equipment, a media description of the second media call of the MRF fed back by the MRF on the media description of the second media call of the first user equipment through the application server.

30. The method of claim 23, wherein:
before sending the first call request to the application server through the APP module of the first user equipment, the method further comprises:
acquiring a user page of the first user equipment from a third-party application server through the APP module of the first user equipment, and displaying the user page;
wherein the first call request also carries user page indication information for indicating information of a user page of the second user equipment.

31. The method of claim 23, wherein:
after the first user equipment and the second user equipment establish the first media call and the second media call, the method further comprises:
if the first user equipment wants to newly add a media stream, acquiring a user page corresponding to the newly-added media stream of the first user equipment from a third-party application server through the APP module of the first user equipment, and displaying the user page; and receiving a media description of the newly-added media stream of the first user equipment sent from the application server.

32. A communication device, comprising:
a first communication module configured to send a first call request to an application server through an application (APP) module of first user equipment, the first call request carrying a converged call identifier; and establish a first media channel between the APP module of the first user equipment and second user equipment so as to conduct a first media call; and
a second communication module configured to send a second call request to the application server through a kernel module of the first user equipment; and establish a second media channel between the kernel module of the first user equipment and the second user equipment so as to conduct a second media call.

33. The device of claim 32, wherein:
the first communication module is configured to establish the first media channel between the APP module of the first user equipment and the second user equipment so as to conduct the first media call in such a manner that: the APP module of the first user equipment sends a media description of the first media call of the first user equipment to the second user equipment through the application server; the APP module of the first user equipment receives a media description of the first media call of the second user equipment fed back by the second user equipment on the media description of the first media call of the first user equipment through the application server; and
the second communication module is configured to establish the second media channel between the kernel module of the first user equipment and the second user equipment so as to conduct the second media call in such a manner that: the kernel module of the first user equipment sends a media description of the second media call of the first user equipment to the second user equipment through the application server; and the kernel module of the first user equipment receives a media description of the second media call of the second user equipment fed back by the second user equipment on the media description of the second media call of the first user equipment through the application server.

34. The device of claim 32, wherein:
the first communication module is configured to establish the first media channel between the APP module of the first user equipment and the second user equipment so as to conduct the first media call in such a manner that: the APP module of the first user equipment sends a media description of the first media call of the first user equipment to a new media server through the application server; and the APP module of the first user equipment receives a media description of the first media call of the new media server fed back by the new media server on the media description of the first media call of the first user equipment through the application server; and
the second communication module is configured to establish the second media channel between the kernel module of the first user equipment and the second user equipment so as to conduct the second media call in such a manner that: the kernel module of the first user equipment sends a media description of the second media call of the first user equipment to a Media Resource Function (MRF) through the application server; and the kernel module of the first user equipment receives a media description of the second media call of the MRF fed back by the MRF on the media description of the second media call of the first user equipment through the application server.

35. The device of claim 32, wherein:
the first communication module is further configured to acquire a user page of the first user equipment from a third-party application server through the APP module of the first user equipment, and display the user page;
wherein the first call request also carries user page indication information for indicating information of a user page of the second user equipment.

36. User equipment, comprising:
a memory, a processor and a communication program stored in the memory and executable on the processor, wherein the communication program, when executed by the processor, implements steps of the communication method of any one of claims 23 to 31.

37. A computer-readable storage medium, wherein a communication program is stored in the computer readable storage medium, and the communication program, when executed by a processor, implements steps of the communication method of any one of claims 22 to 31.

38. A communication system, comprising: the application server of claim 21 and the user equipment of claim 32.
